# EUROPEAN PATENT SPECIFICATION

(11) **EP 3 316 105 B1**
(45) Date of publication and mention of the grant of the patent: **29.07.2020**
(21) Application number: 16881246.9
(22) Date of filing: 29.12.2016
(51) Int. Cl.: G06F 3/048, H04L 12/58

(54) **INSTANT MESSAGE PROCESSING METHOD AND DEVICE**
VERFAHREN UND VORRICHTUNG ZUR SOFORTNACHRICHTENVERARBEITUNG
PROCÉDÉ ET DISPOSITIF DE TRAITEMENT DE MESSAGES INSTANTANÉS

(30) Priority: 30.12.2015 CN 201511021146
(43) Date of publication of application: 02.05.2018
(73) Proprietor: Xiaomi Inc., Beijing 100085 (CN)
(72) Inventor: ZHANG, Peng, Beijing 100085 (CN); GUO, Yi, Beijing 100085 (CN); XIONG, Dawei, Beijing 100085 (CN)
(74) Representative: Steinbauer, Florian
(86) International application number: PCT/CN2016/112973
(87) International publication number: WO 2017/114457

(56) References cited:
- EP-A1- 2 677 433
- EP-A2- 1 879 359
- CN-A- 103 370 683
- CN-A- 104 301 204
- CN-A- 104 965 580
- CN-A- 105 607 883
- US-A1- 2015 127 755

## Description

### TECHNICAL FIELD

The present invention is related to the technical field of communications, and more particularly to an instant message processing method and apparatus.

### BACKGROUND

In related art, while a terminal is running an application, the terminal will display a new message in a notification bar when another application receives the new message. A user may view the new message received by the other application by pulling down the notification bar and process the new message by clicking to enter an interface of the application corresponding to the new message.
EP 2 677 433 A1 discloses an instant message processing method, comprising: receiving an instant message and determining an instant messenger to which the instant message belongs; when it is determined that the instant messenger is not an application corresponding to a current interface, arranging and displaying the instant messages which are unprocessed and which do not belong to the application corresponding to the current interface.
EP 1 879 359 A2 discloses a user interface for a call contact log display. The list is generally organized in a chronological format of contacts, showing contacts that the user communicated with, that the user attempted to contact, that have contacted the user.

### SUMMARY

Embodiments of the present invention provide an instant message processing method and apparatus as follows.

According to a first aspect of embodiments of the invention, there is provided an instant message processing method according to claim 1.

The technical solution according to the embodiments of the invention may have the following advantageous effects. With the technical solution described above, after an instant message of an instant messenger other than an application corresponding to a current interface is received, it can be arranged and displayed on a predetermined edge region of the current interface, together with all other unprocessed instant messages of other instant messengers, thereby enabling a user to view, on the predetermined edge region of the current interface, all unprocessed instant messages of instant messengers other than the application corresponding to the current interface, and enabling a terminal to effectively prompt a user of instant messages of instant messengers while currently displaying another application interface and without affecting current display of the other application interface. This solution furthermore enables message identifications of unprocessed instant messages to be displayed more flexibly, thereby satisfying different user demands. Additionally, by displaying a dialog box of an instant message, the user can process the instant message in the dialog box without entering the interface of an instant messenger. Especially, when a terminal is displaying another application interface, the user can process an instant message in a dialog box and return to the other application interface after processing the instant message, thereby saving a large amount of time and eliminating cumbersome operations for the user to process the instant message and hence improving user experience.

In an embodiment, the message identification includes an identification of a contact sending the instant message.

In this embodiment, by arranging and displaying message identifications of instant messages on the predetermined edge region of the current interface, the user can view unprocessed instant messages of other instant messengers on the predetermined edge region, thereby enabling a terminal to effectively prompt the user of instant messages of instant messengers while currently displaying another application interface and without affecting current display of the other application interface.

In an embodiment, when the message identification includes the application identification of the instant messenger corresponding to the instant message and the number of unprocessed instant messages received by the instant messenger corresponding to the instant message, arranging and displaying, on the predetermined edge region of the current interface, the received instant messenger together with all other instant messages which are unprocessed and which do not belong to the application corresponding to the current interface comprises: determining instant messengers corresponding to the received instant message and all other instant messages which are unprocessed and which do not belong to the application corresponding to the current interface; determining receiving times of unprocessed instant messages latest received by respective ones of the instant messengers; and arranging and displaying, on the predetermined edge region of the current interface, the application identification of each of the instant messengers and the number of unprocessed instant messages received by the instant messenger, according to a chronological order of the determined receiving times.

In this embodiment, by arranging and displaying, on a predetermined edge region, application identifications of instant messengers and the numbers of unprocessed instant messages received by the instant messengers wherein message identifications are arranged and displayed according to receiving times of unprocessed instant messages latest received by respective ones of the instant messengers, the user can know at a glance information on unprocessed instant messages (especially the number of and the chronological order of the receiving times of the unprocessed instant messages) without entering interfaces of instant messengers corresponding to the instant messages, thereby improving user experience.

In an embodiment, when the message identification includes the identification of the contact sending the instant message and the number of unprocessed instant messages sent by the contact sending the instant message, arranging and displaying, on the predetermined edge region of the current interface, the received instant messenger together with all other instant messages which are unprocessed and which do not belong to the application corresponding to the current interface comprises: determining contacts corresponding to the received instant message and all other instant messages which are unprocessed and which do not belong to the application corresponding to the current interface; determining receiving times of unprocessed instant messages latest sent by respective ones of the contacts; and arranging and displaying, on the predetermined edge region of the current interface, the contact identification of each of the contacts and the number of unprocessed instant messages sent by the contact, according to a chronological order of the determined receiving times.

In this embodiment, by arranging and displaying, on a predetermined edge region, contact identifications of contacts and the numbers of unprocessed instant messages sent by the contacts wherein message identifications are arranged and displayed according to receiving times of unprocessed instant messages latest sent by respective ones of the contacts, the user can know at a glance information on unprocessed instant messages (especially contact information of and the chronological order of the receiving times of the unprocessed instant messages) without entering interfaces of instant messengers corresponding to the instant messages, thereby improving user experience.

In an embodiment, when the message identification includes the identification of the contact sending the instant message and the number of unprocessed instant messages sent by the contact sending the instant message, the method further comprises: when a second predetermined operation performed by a user on any message identification is received, displaying on the current interface a dialog box of at least one instant message sent by a contact corresponding to the message identification, wherein the dialog box has a smaller size than the current interface.

In this embodiment, by displaying a dialog box of an instant message, the user can process the instant message in the dialog box without entering the interface of an instant messenger. Especially, when a terminal is displaying another application interface, the user can process an instant message in a dialog box and return to the other application interface after processing the instant message, thereby saving a large amount of time and eliminating cumbersome operations for the user to process the instant message and hence improving user experience.

In an embodiment, the first predetermined operation or the second predetermined operation includes at least one of the following: a predetermined number of click operations on the message identification; and a sliding operation of sliding the message identification along a predetermined direction.

This embodiment enables users' operations on message identifications to be diversified and can satisfy different user demands.

According to a second aspect of embodiments of the invention, there is provided an instant message processing apparatus according to claim 7.

In an embodiment, the message identification includes an identification of a contact sending the instant message.

In an embodiment, when the message identification includes the application identification of the instant messenger corresponding to the instant message and the number of unprocessed instant messages received by the instant messenger corresponding to the instant message, the first displaying module comprises: a first determining sub-module configured to determine instant messengers corresponding to the received instant message and all other instant messages which are unprocessed and which do not belong to the application corresponding to the current interface; a second determining sub-module configured to determine receiving times of unprocessed instant messages latest received by respective ones of the instant messengers determined by the first determining sub-module; and a first displaying sub-module configured to arrange and display, on the predetermined edge region of the current interface, the application identification of each of the instant messengers and the number of unprocessed instant messages received by the instant messenger, according to a chronological order of the receiving times determined by the second determining sub-module.

In an embodiment, when the message identification includes the identification of the contact sending the instant message and the number of unprocessed instant messages sent by the contact sending the instant message, the first displaying module comprises: a third determining sub-module configured to determine contacts corresponding to the received instant message and all other instant messages which are unprocessed and which do not belong to the application corresponding to the current interface; a fourth determining sub-module configured to determine receiving times of unprocessed instant messages latest sent by respective ones of the contacts determined by the third determining sub-module; and a second displaying sub-module configured to arrange and display, on the predetermined edge region of the current interface, the contact identification of each of the contacts and the number of unprocessed instant messages sent by the contact, according to a chronological order of the receiving times determined by the fourth determining sub-module.

In an embodiment, when the message identification displayed by the first displaying module includes the identification of the contact sending the instant message and the number of unprocessed instant messages sent by the contact sending the instant message, the apparatus further comprises: a fourth displaying module configured to, when a second predetermined operation performed by a user on any message identification is received, display on the current interface a dialog box of at least one instant message sent by a contact corresponding to the message identification, wherein the dialog box has a smaller size than the current interface.

In an embodiment, the first predetermined operation or the second predetermined operation includes at least one of the following: a predetermined number of click operations on the message identification; and a sliding operation of sliding the message identification along a predetermined direction.

According to a third aspect of embodiments of the invention, there is provided an instant message processing apparatus according to claim 10.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart of an instant message processing method according to an exemplary embodiment.
Fig. 2 is a flowchart of a step S12 in an instant message processing method according to an exemplary embodiment.
Fig. 3 is a schematic diagram illustrating a current interface of a terminal displayed during performance of an instant message processing method according to a specific embodiment 1.
Fig. 4 is a flowchart of an instant message processing method according to an exemplary embodiment.
Fig. 5 is a schematic diagram illustrating a current interface of a terminal displayed during performance of an instant message processing method according to the specific embodiment 1.
Fig. 6 is a schematic diagram illustrating a current interface of a terminal displayed during performance of an instant message processing method according to the specific embodiment 1.
Fig. 7 is a flowchart of an instant message processing method according to an exemplary embodiment.
Fig. 8 is a schematic diagram illustrating a current interface of a terminal displayed during performance of an instant message processing method according to the specific embodiment 1.
Fig. 9 is a schematic diagram illustrating a current interface of a terminal displayed during performance of an instant message processing method according to the specific embodiment 1.
Fig. 10 is a flowchart of a step S12 in an instant message processing method according to an exemplary embodiment.
Fig. 11 is a schematic diagram illustrating a current interface of a terminal displayed during performance of an instant message processing method according to a specific embodiment 2.
Fig. 12 is a flowchart of an instant message processing method according to an exemplary embodiment.
Fig. 13 is a schematic diagram illustrating a current interface of a terminal displayed during performance of an instant message processing method according to the specific embodiment 2.
Fig. 14 is a schematic diagram illustrating a current interface of a terminal displayed during performance of an instant message processing method according to the specific embodiment 2.
Fig. 15 is a schematic diagram illustrating a current interface of a terminal displayed during performance of an instant message processing method according to the specific embodiment 2.
Fig. 16 is a block diagram of an instant message processing apparatus according to an exemplary embodiment.
Fig. 17 is a block diagram of a first displaying module in an instant message processing apparatus according to an exemplary embodiment.
Fig. 18 is a block diagram of an instant message processing apparatus according to an exemplary embodiment.
Fig. 19 is a block diagram of a first displaying module in an instant message processing apparatus according to an exemplary embodiment.
Fig. 20 is a block diagram of an instant message processing apparatus according to an exemplary embodiment.
Fig. 21 is a block diagram of an instant message processing apparatus according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise indicated. The implementations set forth in the following description of embodiments do not represent all implementations consistent with the invention. Instead, they are merely examples of apparatuses and methods consistent with aspects related to the invention as recited in the appended claims.

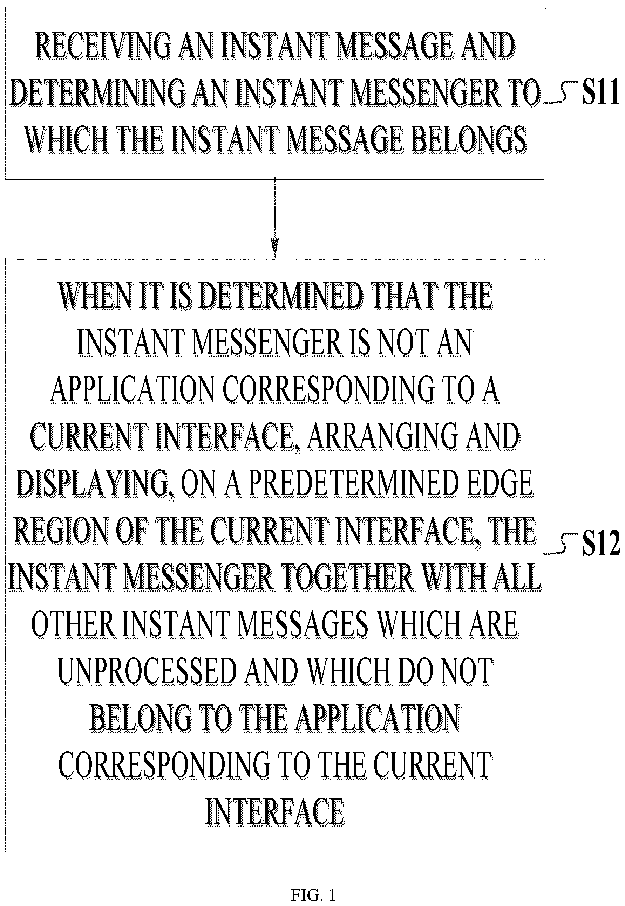

Fig. 1 is a flowchart of an instant message processing method according to an exemplary embodiment. The method is used in a terminal, which may be a mobile phone, a computer, a digital broadcast terminal, a messaging device, a gaming console, a tablet device, a medical device, exercise equipment, a personal digital assistant or the like. As shown in Fig. 1, the method comprises the following steps S11-S12.

In step S11, an instant message is received, and an instant messenger to which the instant message belongs is determined.

The instant message is a message communicated by a user using the instant messenger.

In step S12, when it is determined that the instant messenger is not an application corresponding to a current interface, the instant messenger is arranged and displayed, on a predetermined edge region of the current interface, together with all other instant messages which are unprocessed and which do not belong to the application corresponding to the current interface.

In an embodiment, when arranging and displaying the received instant messenger, on the predetermined edge region of the current interface, together with all other instant messages which are unprocessed and which do not belong to the application corresponding to the current interface, the terminal displays a message identification for each of the displayed instant messages. The message identification includes at least one of an application identification of an instant messenger corresponding to the instant message and an identification of a contact sending the instant message.

The predetermined edge region may be an edge region on one side of the current interface of the terminal, such as a left edge region, a right edge region, an upper edge region or a lower edge region on the current interface of the terminal, so as not to block primary contents displayed on the current interface of the terminal from being seen.

With the technical solution according to the embodiment of the invention, after an instant message of an instant messenger other than an application corresponding to a current interface is received, it can be arranged and displayed, on a predetermined edge region of the current interface, together with all other unprocessed instant messages of other instant messengers, thereby enabling a user to view, on the predetermined edge region of the current interface, all unprocessed instant messages of instant messengers other than the application corresponding to the current interface, and enabling a terminal to effectively prompt a user of instant messages of instant messengers while currently displaying another application interface and without affecting current display of the other application interface.

In the above method, depending on different contents contained in a message identification, the message identification is displayed in different manners. Regarding the contents included in a message identification of an instant message, there are mainly two cases as follows: the message identification includes an application identification of an instant messenger corresponding to the instant message and the number of unprocessed instant messages received by the instant messenger corresponding to the instant message; or the message identification includes an identification of a contact sending the instant message and the number of unprocessed instant messages sent by the contact sending the instant message. In the following, it will be described how to display a message identification of an instant message at a terminal for these two cases respectively.

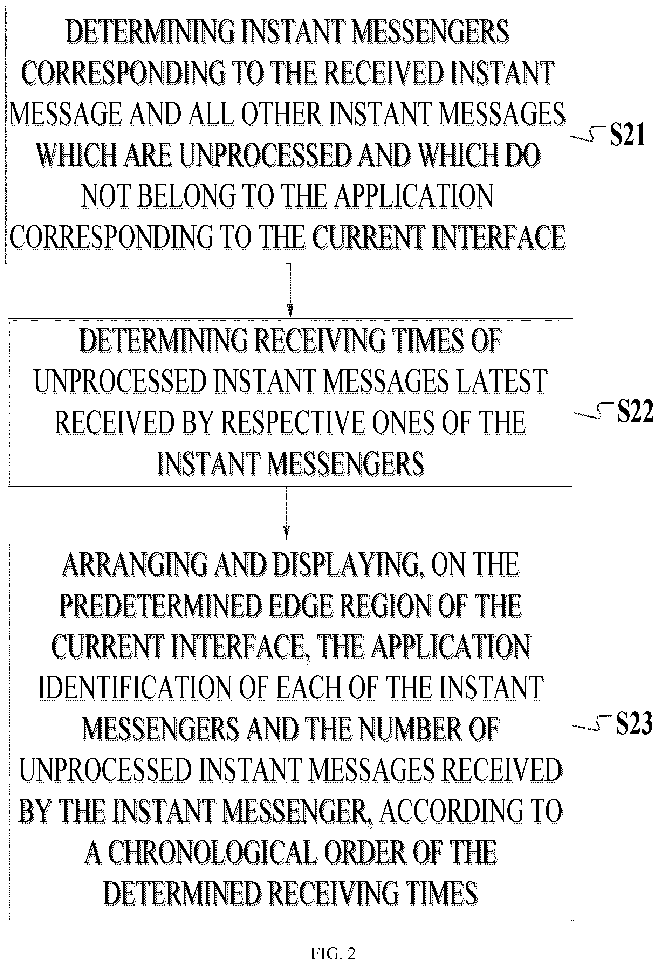

In an embodiment, when the message identification includes the application identification of the instant messenger corresponding to the instant message and the number of unprocessed instant messages received by the instant messenger corresponding to the instant message, the step S12 may be implemented as the following steps S21-S23 as shown in Fig. 2.

At step S21, instant messengers corresponding to the received instant message and all other instant messages which are unprocessed and which do not belong to the application corresponding to the current interface are determined.

At step S22, receiving times of unprocessed instant messages latest received by respective ones of the instant messengers are determined.

At step S23, the application identification of each of the instant messengers and the number of unprocessed instant messages received by the instant messenger are arranged and displayed on the predetermined edge region of the current interface, according to a chronological order of the determined receiving times.

As can be seen from the embodiment, when the terminal receives a new instant message which does not belong to the application corresponding to the current interface, it will display the message identification corresponding to the instant message at the very beginning position in the predetermined edge region.

In the embodiment, by arranging and displaying, on a predetermined edge region, application identifications of instant messengers and the numbers of unprocessed instant messages received by the instant messengers wherein message identifications are arranged and displayed according to receiving times of unprocessed instant messages latest received by respective ones of the instant messengers, the user can know at a glance information on unprocessed instant messages (especially the number of and the chronological order of the receiving times of the unprocessed instant messages) without entering interfaces of instant messengers corresponding to the instant messages, thereby improving user experience.

In the following, the technical solution according to the embodiment will be explained by giving a specific embodiment 1.

### Embodiment 1

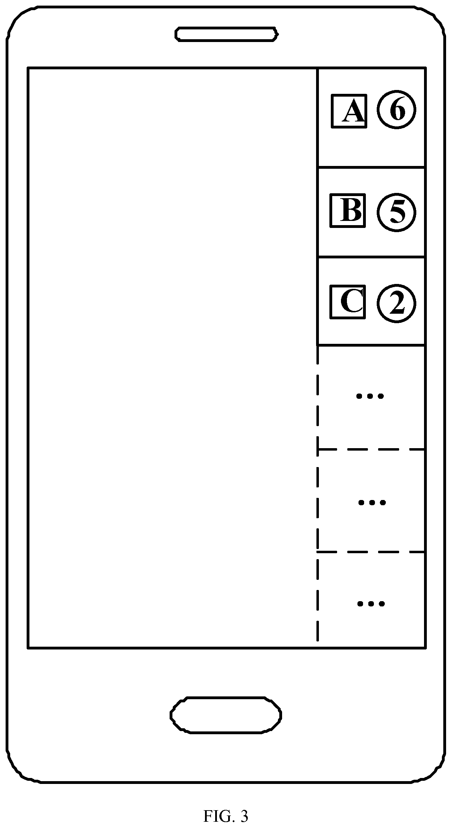

Fig. 3 is a diagram illustrating a current interface of a terminal in the embodiment 1. In this embodiment, the predetermined edge region is a right edge region of the current interface of the terminal. As shown in Fig. 3, the application corresponding to the current interface of the terminal is an application M. On the right edge region of the interface of the terminal, there are arranged and displayed message identifications of unprocessed instant messages received by instant messengers A, B and C. Each message identification includes an application identification of its corresponding instant messenger and the number of unprocessed instant messages received by the instant messenger.

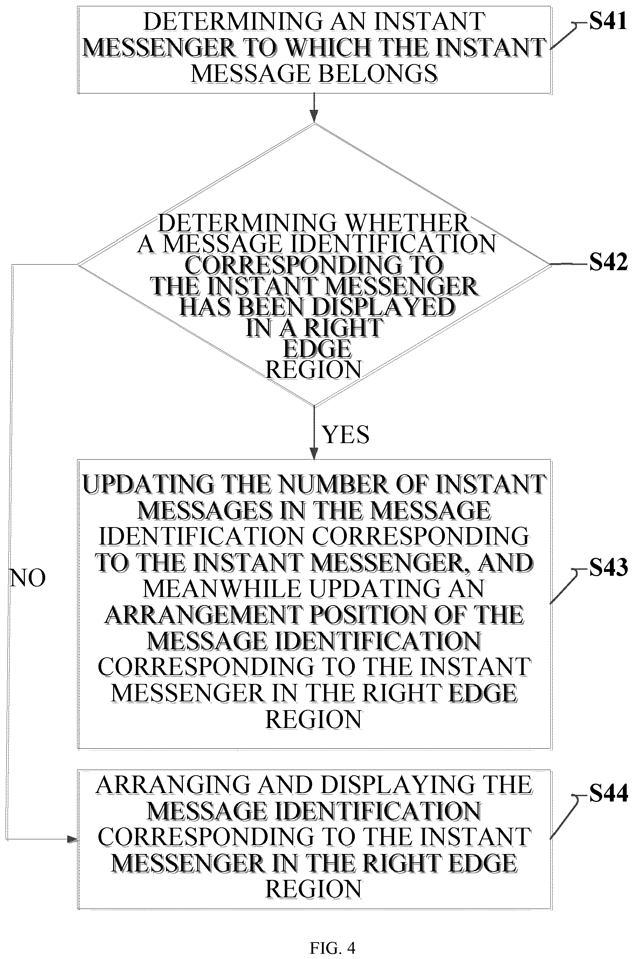

On the terminal interface shown in Fig. 3, the number of unprocessed instant messages received by each instant messenger is shown as a numerical value. Specifically, the number of unprocessed instant messages received by the instant messenger A is 6, the number of unprocessed instant messages received by the instant messenger B is 5, and the number of unprocessed instant messages received by the instant messenger C is 2. When the terminal receives a further instant message which does not belong to the application corresponding to the current interface (namely, the application M), the message identification of the instant message may be arranged and displayed according to the following steps S41-S44 shown in Fig. 4, since the receiving time of the instant message is later than that of any instant message in the right edge region.

At step S41, an instant messenger to which the instant message belongs is determined.

At step S42, it is determined whether a message identification corresponding to the instant messenger has been displayed in the right edge region. The message identification corresponding to the instant messenger is a message identification of one or more unprocessed instant messages received by the instant messenger. If the message identification corresponding to the instant messenger has been displayed in the right edge region, then step S43 is performed. If the message identification corresponding to the instant messenger has not been displayed in the right edge region, step S44 is performed.

At step S43, the number of instant messages in the message identification corresponding to the instant messenger is updated, and meanwhile an arrangement position of the message identification corresponding to the instant messenger in the right edge region is updated.

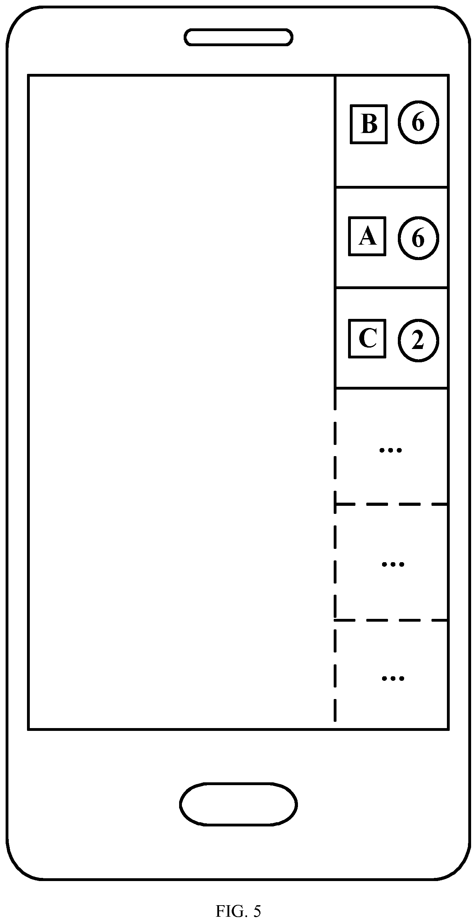

For example, if the instant messenger corresponding to the received instant message is the instant messenger B, then the number in the message identification corresponding to the instant messenger B is updated from 5 to 6. Meanwhile, in the embodiment, message identifications are arranged and displayed in the predetermined edge region according to receiving times of unprocessed instant messages latest received by respective ones of the instant messengers, such that the later the receiving time of an unprocessed instant message latest received by an instant messenger is, the nearer the arrangement position of the message identification corresponding to the instant messenger is to the beginning position in the predetermined edge region. Therefore, the arrangement position of the message identification corresponding to the instant messenger B in the right edge region is updated, that is, the message identification corresponding to the instant messenger B is arranged and displayed at the very beginning position in the right edge region as shown in Fig. 5.

In addition, the message identification of the instant message may also be displayed in a highlighted manner. For example, while being arranged and displayed at the very beginning position in the right edge region at step S43, the message identification corresponding to the instant messenger B is highlighted, in order to accomplish more effective prompting. The time period for highlighting may be set in advance. For example, the highlighting lasts 5 seconds. In addition, the message identification may blink by being highlighted intermittently, and the number of blinks may also be set in advance. For example, the message identification blinks (is highlighted intermittently) three times.

At step S44, the message identification corresponding to the instant messenger is arranged and displayed in the right edge region.

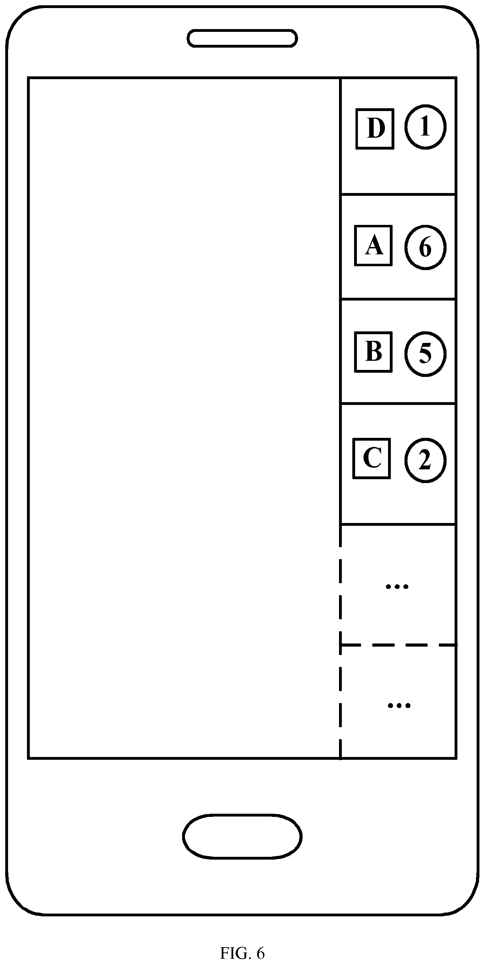

For example, if the instant messenger corresponding to the received instant message is an instant messenger D, then a message identification corresponding to the instant messenger D is displayed at the very beginning position in the right edge region. The message identification includes an application identification of the instant messenger D and the number of unprocessed instant messages received by the instant messenger D. As shown in Fig. 6, at this point, the number of unprocessed instant messages received by the instant messenger D is 1.

The embodiment illustrates the case where the predetermined edge region is the right edge region. The implementation for another predetermined edge region is the same as that for the right edge region and will not be described here redundantly.

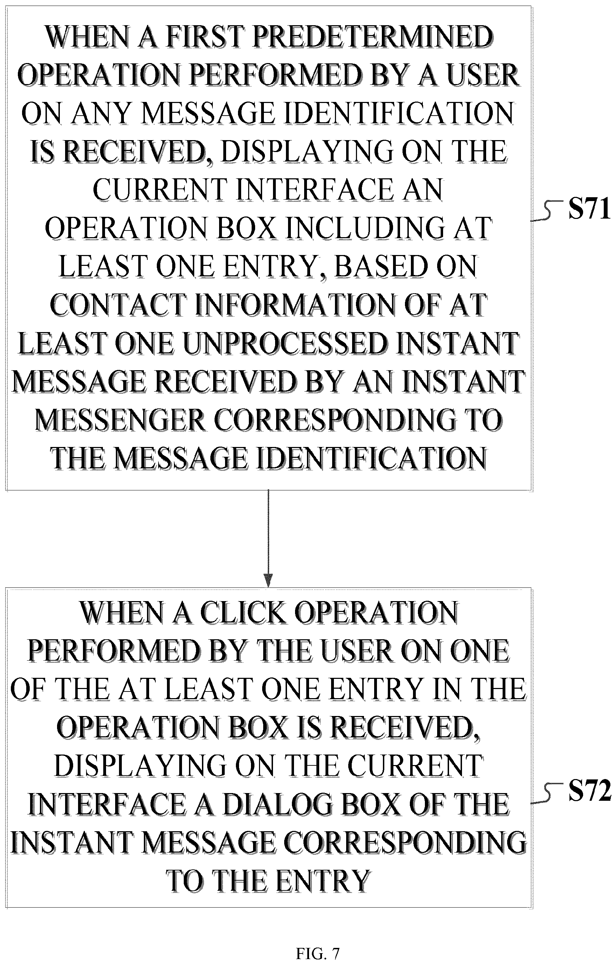

Further to the manner for displaying a message identification according to the above embodiment, the above method also includes steps S71-S72 shown in Fig. 7.

At step S71, when a first predetermined operation performed by a user on any message identification is received, an operation box including at least one entry is displayed on the current interface, based on contact information of at least one unprocessed instant message received by an instant messenger corresponding to the message identification. Each entry corresponds to at least one instant message sent by a contact.

After the user performs the first predetermined operation on the message identification, displaying of the message identification in the predetermined edge region may be cancelled.

The first predetermined operation includes at least one of the following: a predetermined number of click operations on the message identification; and a sliding operation of sliding the message identification along a predetermined direction. For example, after the user clicks the message identification once or multiple times consecutively or slides the message identification towards the center of the current interface of the terminal, an operation box corresponding to the message identification will be displayed on the current interface of the terminal. The operation box includes one or more entries, and has a size smaller than the current interface of the terminal.

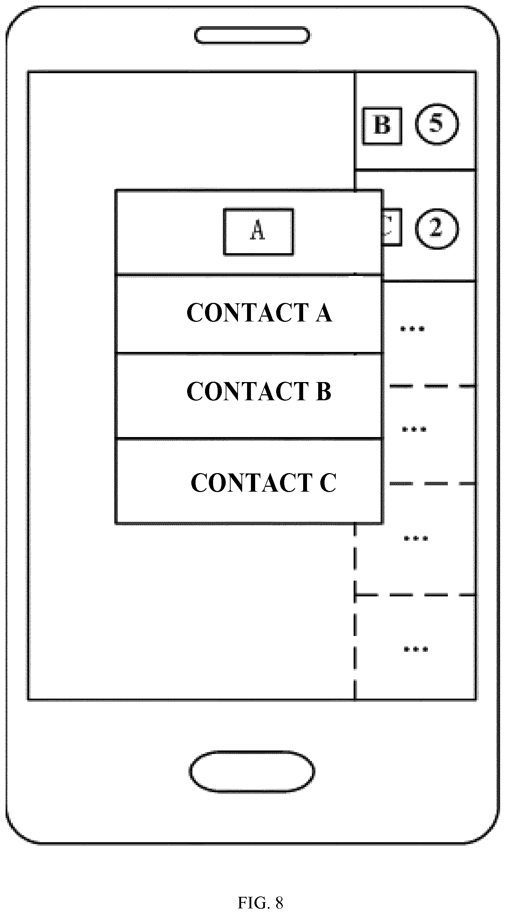

Taking again the technical solution according to the above specific embodiment 1 as an example, supposing contacts corresponding to unprocessed instant messages received by the instant messenger A include contacts a, b and c, an operation box including three entries will be displayed on the current interface of the terminal after the user performs the first predetermined operation on the message identification corresponding to the instant messenger A. The three entries correspond respectively to instant messages sent by the contact a, b and c, as shown in Fig. 8.

In an embodiment, each entry in the operation box may also display the number of instant messages sent by the corresponding contact, so as to provide the user with more detailed information on the instant messages.

At step S72, when a click operation performed by the user on one of the at least one entry in the operation box is received, a dialog box of the instant message corresponding to the entry is displayed on the current interface. The dialog box has a size smaller than the current interface. For example, the size of the dialog box is half the size of the current interface. In addition, the dialog box may include contents of the instant message corresponding to the entry.

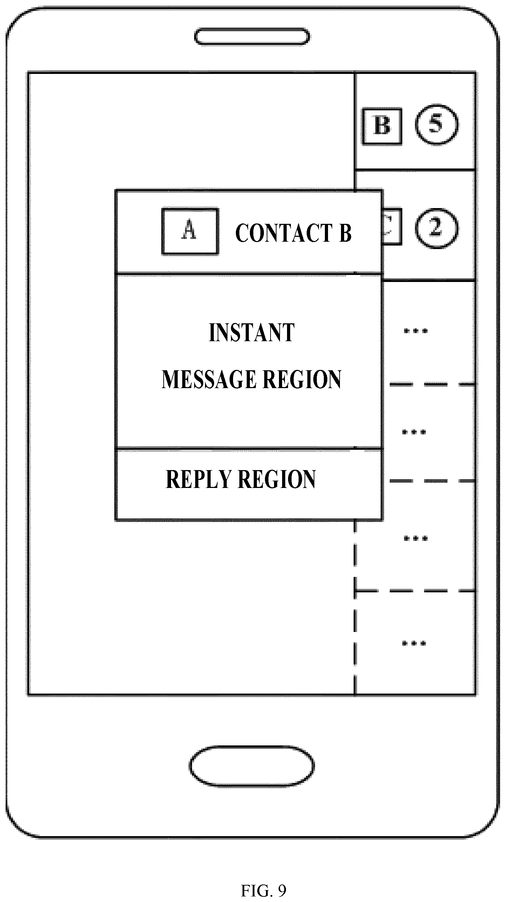

Taking the terminal interface shown in Fig. 8 as an example, when the user performs a click operation on the entry corresponding to the contact b, a dialog box of one or more instant messages corresponding to the entry will be displayed on the current interface. The user can directly process the instant messages sent by the contact b in the dialog box. As shown in Fig. 9, the dialog box has an "instant message region" for displaying instant messages communicated between the user and the contact b and a "reply region" for the user to reply to the instant messages. After the user clicks the "reply region", a keyboard may be popped up on the current interface for the user to enter contents for replying.

Furthermore, for an operation box and/or a dialog box for instant messages displayed on the terminal, the user may cancel displaying of the operation box and/or the dialog box by performing a predetermined operation. For example, after the user completes processing of an instant message in the dialog box, he/she can cancel displaying of the dialog box on the current interface simply by sliding the dialog box towards the edge of the terminal. Then, if there is any other unprocessed instant message in the instant messenger corresponding to the instant message, the message identification corresponding to the instant messenger displayed in the predetermined edge region will be updated (for example, the number of instant messages will be updated). If all instant messages in the instant messenger corresponding to the instant message have been processed, the message identification corresponding to the instant message will not be displayed in the predetermined edge region any more.

In the embodiment, by displaying a dialog box of an instant message, the user can process the instant message in the dialog box without entering the interface of an instant messenger. Especially, when a terminal is displaying another application interface, the user can process an instant message in a dialog box and return to the other application interface after processing the instant message, thereby saving a large amount of time and eliminating cumbersome operations for the user to process the instant message and hence improving user experience.

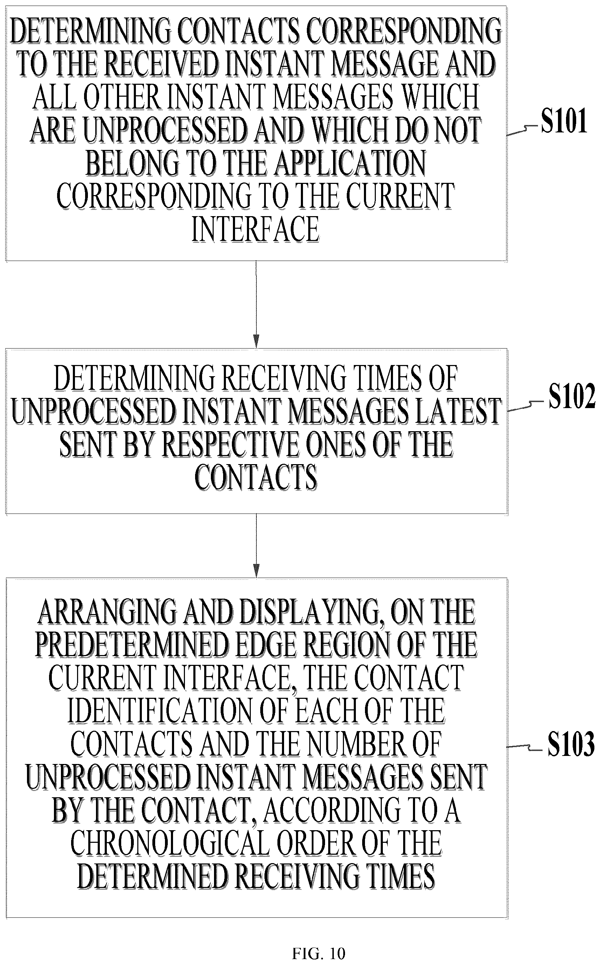

In an embodiment, the message identification may include only the identification of the contact sending the instant message or both the identification of the contact sending the instant message and the number of unprocessed instant messages sent by the contact sending the instant message. In the latter case, as shown in Fig. 10, the step S12 may be implemented as the following steps S101-S103.

At step S101, contacts corresponding to the received instant message and all other instant messages which are unprocessed and which do not belong to the application corresponding to the current interface are determined.

At step S102, receiving times of unprocessed instant messages latest sent by respective ones of the contacts are determined.

At step S103, the contact identification of each of the contacts and the number of unprocessed instant messages sent by the contact are arranged and displayed on the predetermined edge region of the current interface, according to a chronological order of the determined receiving times.

As can be seen from the embodiment, when the terminal receives a new instant message which does not belong to the application corresponding to the current interface, it will display the message identification corresponding to the instant message at the very beginning position in the predetermined edge region.

In the embodiment, by arranging and displaying, on a predetermined edge region, contact identifications of contacts and the numbers of unprocessed instant messages sent by the contacts wherein message identifications are arranged and displayed according to receiving times of unprocessed instant messages latest sent by respective ones of the contacts, the user can know at a glance information on unprocessed instant messages (especially contact information of and the chronological order of the receiving times of the unprocessed instant messages) without entering interfaces of instant messengers corresponding to the instant messages, thereby improving user experience.

In the following, the technical solution according to the embodiment will be explained by giving a specific embodiment 2.

### Embodiment 2

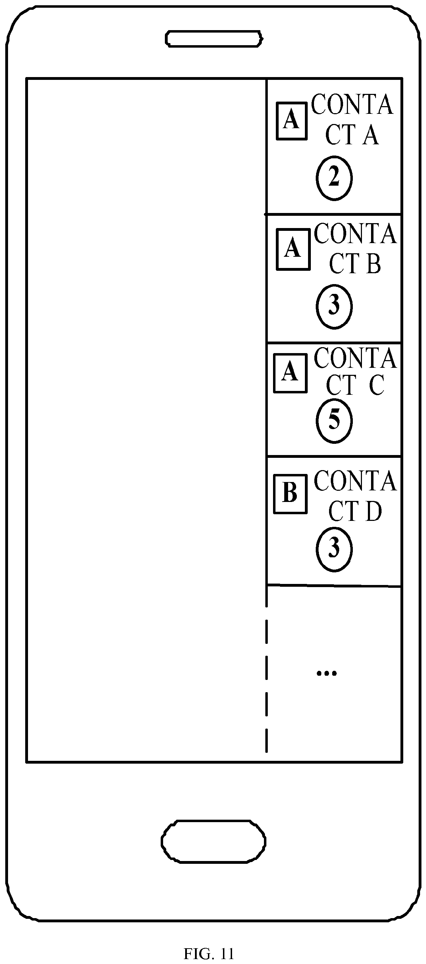

Fig. 11 is a diagram illustrating a current interface of a terminal in the embodiment 2. In this embodiment, the predetermined edge region is a right edge region of the current interface of the terminal. As shown in Fig. 11, the application corresponding to the current interface of the terminal is an application M. On the right edge region of the interface of the terminal, there are arranged and displayed message identifications of unprocessed instant messages sent by contacts a, b and c in an instant messenger A and a contact d in an instant messenger B. Each message identification includes an identification of its corresponding contact and the number of unprocessed instant messages sent by the contact.

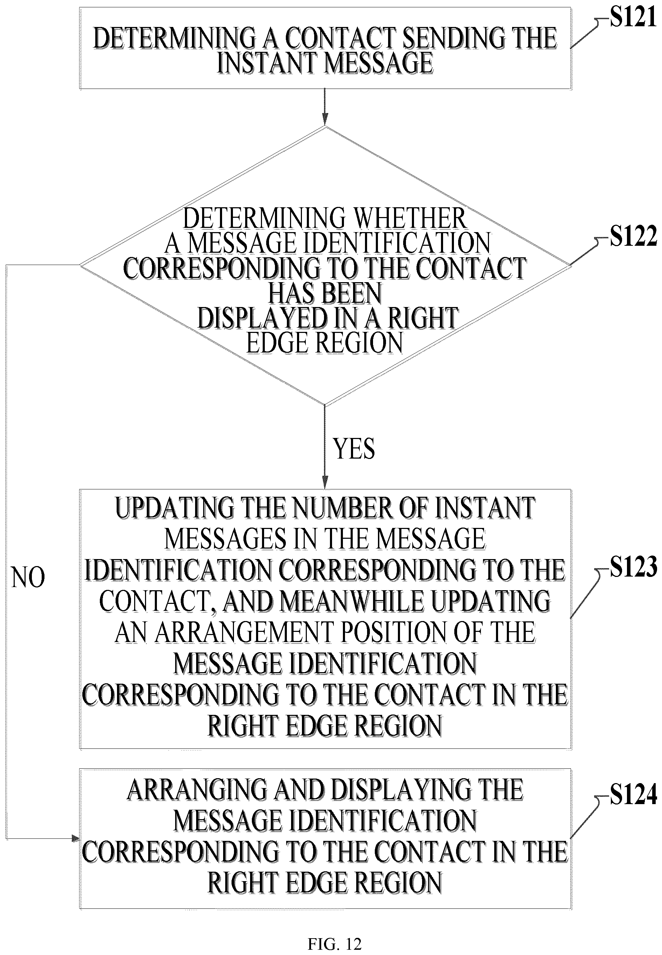

On the terminal interface shown in Fig. 11, the number of unprocessed instant messages sent by each contact is shown as a numerical value. Specifically, the number of unprocessed instant messages sent by the contact a in the instant messenger A is 2, the number of unprocessed instant messages sent by the contact b in the instant messenger A is 3, the number of unprocessed instant messages sent by the contact c in the instant messenger A is 5, and the number of unprocessed instant messages sent by the contact d in the instant messenger B is 3. When the terminal receives a further instant message which does not belong to the application corresponding to the current interface (namely, the application M), the message identification of the instant message may be arranged and displayed according to the following steps S121-S124 shown in Fig. 12, since the receiving time of the instant message is later than that of any instant message in the right edge region.

At step S121, a contact sending the instant message is determined.

At step S122, it is determined whether a message identification corresponding to the contact has been displayed in the right edge region. The message identification corresponding to the contact is a message identification of one or more unprocessed instant messages sent by the contact. If the message identification corresponding to the contact has been displayed in the right edge region, then step S123 is performed. If the message identification corresponding to the contact has not been displayed in the right edge region, step S124 is performed.

At step S123, the number of instant messages in the message identification corresponding to the contact is updated, and meanwhile an arrangement position of the message identification corresponding to the contact in the right edge region is updated.

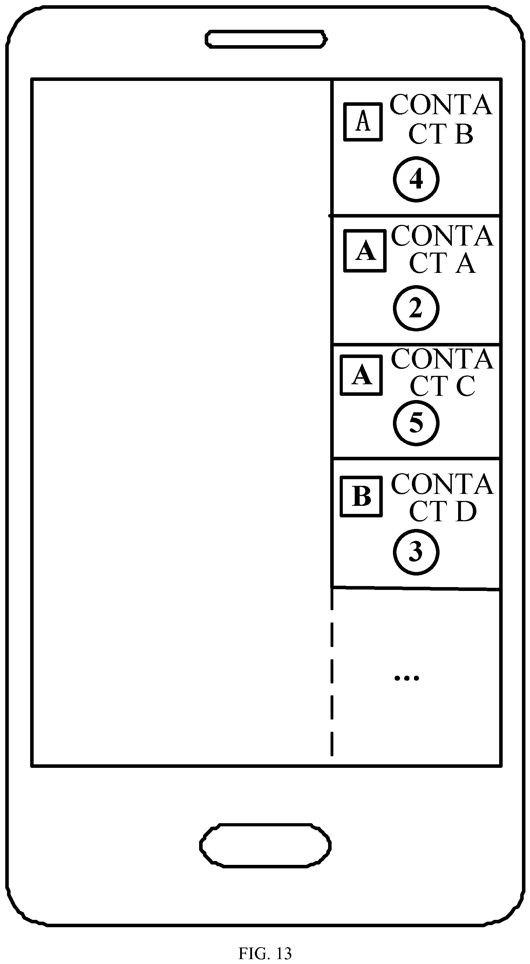

In the embodiment, the later the receiving time of the unprocessed instant message latest sent by the contact is, the nearer the arrangement position of the message identification corresponding to the contact is to the beginning position in the predetermined edge region. For example, if the contact sending the instant message is the contact b in the instant messenger A, then the number in the message identification corresponding to the contact b is updated from 3 to 4 and meanwhile the message identification corresponding to the contact b is displayed at the very beginning position in the right edge region, as shown in Fig. 13.

In addition, the message identification corresponding to the contact may also be displayed in a highlighted manner. For example, while being displayed at the very beginning position in the right edge region at step S123, the message identification corresponding to the contact b is highlighted, in order to accomplish more effective prompting. The time period for highlighting may be set in advance. For example, the highlighting lasts 5 seconds. In addition, the message identification may blink by being highlighted intermittently, and the number of blinks may also be set in advance. For example, the message identification blinks (is highlighted) three times.

At step S124, the message identification corresponding to the contact is arranged and displayed in the right edge region.

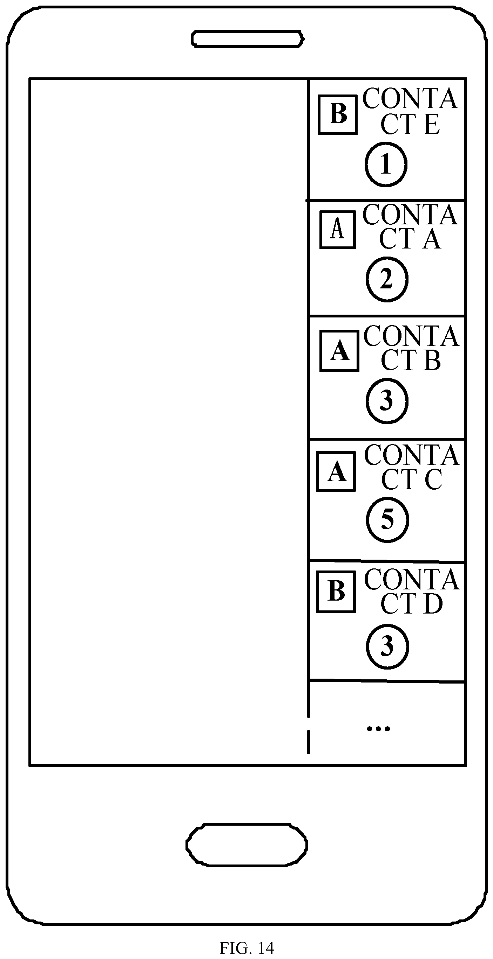

For example, if the contact sending the instant message is a contact e in the instant messenger B, then a message identification corresponding to the contact e is arranged and displayed at the very beginning position in the right edge region. The message identification includes a contact identification of the contact e and the number of unprocessed instant messages sent by the contact e. As shown in Fig. 14, at this point, the number of unprocessed instant messages sent by the contact e is 1.

The embodiment illustrates the case where the predetermined edge region is the right edge region. The implementation for another predetermined edge region is the same as that for the right edge region and will not be described here redundantly.

Further to the manner for displaying a message identification according to the above embodiment, the method further comprises: when a second predetermined operation performed by a user on any message identification is received, a dialog box of at least one instant message sent by a contact corresponding to the message identification is displayed on the current interface. The dialog box has a smaller size than the current interface, and the dialog box may include contents of the instant message sent by the contact corresponding to the message identification.

After the dialog box including the instant message sent by the contact is displayed on the current interface, displaying of the message identification corresponding to the contact in the predetermined edge region may be cancelled.

The second predetermined operation may include at least one of the following: a predetermined number of click operations on the message identification; and a sliding operation of sliding the message identification along a predetermined direction. For example, after the user clicks the message identification once or twice consecutively or slides the message identification towards the center of the current interface of the terminal, a dialog box corresponding to the message identification will be displayed on the current interface of the terminal.

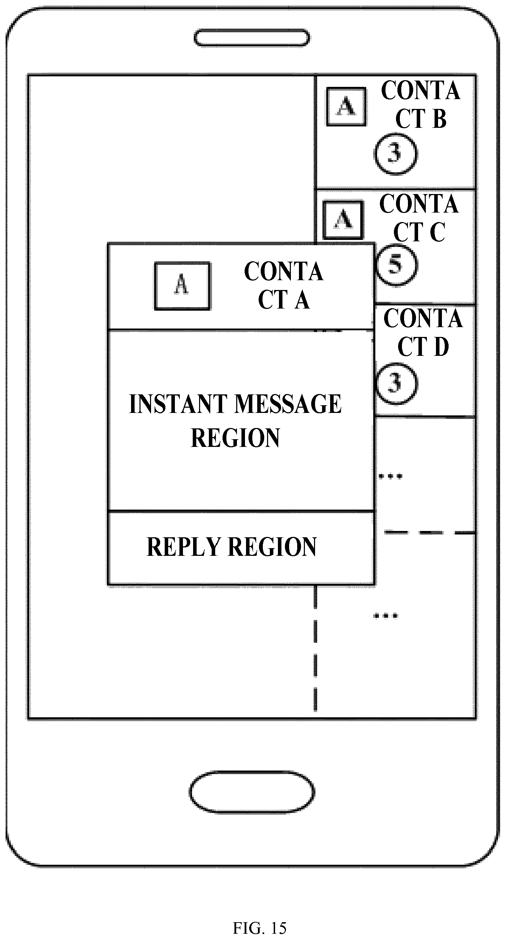

Taking again the technical solution according to the above specific embodiment 2 as an example, the second predetermined operation is sliding to the left. If the user slides the message identification corresponding to the contact a in the instant messenger A to the left on the current interface of the terminal shown in Fig. 11, a dialog box of instant messages sent by the contact a will be displayed on the current interface of the terminal. As shown in Fig. 15, the dialog box has a size smaller than the current interface. For example, the size of dialog box is half the size of the current interface. The dialog box has an "instant message region" for displaying instant messages communicated between the user and the contact a and a "reply region" for the user to reply to the instant messages. After the user clicks the "reply region", a keyboard may be popped up for the user to enter contents for replying.

In the embodiment, by displaying a dialog box of an instant message, the user can process the instant message in the dialog box without entering the interface of an instant messenger. Especially, when a terminal is displaying another application interface, the user can process an instant message in a dialog box and return to the other application interface after processing the instant message, thereby saving a large amount of time and eliminating cumbersome operations for the user to process the instant message and hence improving user experience.

In an embodiment, for a dialog box for an instant message displayed on the terminal, the user may cancel displaying of the dialog box by performing a predetermined operation, so that the terminal returns to the application previously displayed on the interface. For example, when viewing another page, the user processes an instant message in a popped-up dialog box. After completing the processing, the user slides the dialog box towards the edge of the terminal, so that the terminal will return to the other page previously viewed by the user without requiring the user to perform cumbersome operations.

In any of the above embodiments, the user may cancel displaying of message identifications of instant messages by performing a predetermined operation. For example, it is set in advance not to display message identifications of instant messages; or after the message identifications of the instant messages are displayed, displaying of the message identifications of the instant messages is cancelled by long-pressing a predetermined position in the predetermined edge region.

In any of the above embodiments, the user may also cancel displaying of one or more of message identifications of instant messages. For example, when the user would not like to process one or more instant messages corresponding to a certain message identification, he/she may cancel displaying of the message identification by long-pressing or sliding outwards the message identification.

In the following are described apparatus embodiments of the invention which can implement the method embodiments of the invention.

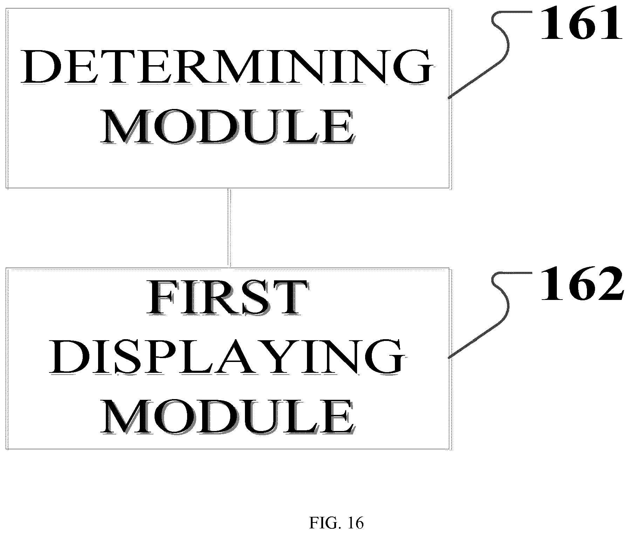

Fig. 16 is a block diagram of an instant message processing apparatus according to an exemplary embodiment. The apparatus may be implemented as a part or the entirety of an electronic device by software, hardware or a combination thereof. Referring to Fig. 16, the instant message processing apparatus comprises a determining module 161 and a first displaying module 162.

The determining module 161 is configured to receive an instant message and determine an instant messenger to which the instant message belongs.

The first displaying module 162 is configured to, when the determining module 161 determines that the instant messenger is not an application corresponding to a current interface, arrange and display, on a predetermined edge region of the current interface, the instant messenger together with all other instant messages which are unprocessed and which do not belong to the application corresponding to the current interface.

In an embodiment, the first displaying module 162 is configured to, when the received instant messenger is arranged and displayed, on the predetermined edge region of the current interface, together with all other instant messages which are unprocessed and which do not belong to the application corresponding to the current interface, display a message identification for each of the displayed instant messages. The message identification includes at least one of an application identification of an instant messenger corresponding to the instant message and an identification of a contact sending the instant message.

The predetermined edge region may be an edge region on one side of the current interface of the terminal, such as a left edge region, a right edge region, an upper edge region or a lower edge region on the current interface, so as not to block primary contents displayed on the current interface of the terminal from being seen.

With the apparatus according to the embodiment of the invention, after an instant message of an instant messenger other than an application corresponding to a current interface is received, it can be arranged and displayed by the first displaying module 162, on a predetermined edge region of the current interface, together with all other unprocessed instant messages of other instant messengers, thereby enabling a user to view, on the predetermined edge region of the current interface, all unprocessed instant messages of instant messengers other than the application corresponding to the current interface, and enabling a terminal to effectively prompt a user of instant messages of instant messengers while currently displaying another application interface and without affecting current display of the other application interface.

In an embodiment, the message identification displayed by the first displaying module 162 includes the application identification of the instant messenger corresponding to the instant message and a number of unprocessed instant messages received by the instant messenger corresponding to the instant message; or the message identification displayed by the first displaying module 162 includes the identification of the contact sending the instant message and a number of unprocessed instant messages sent by the contact sending the instant message.

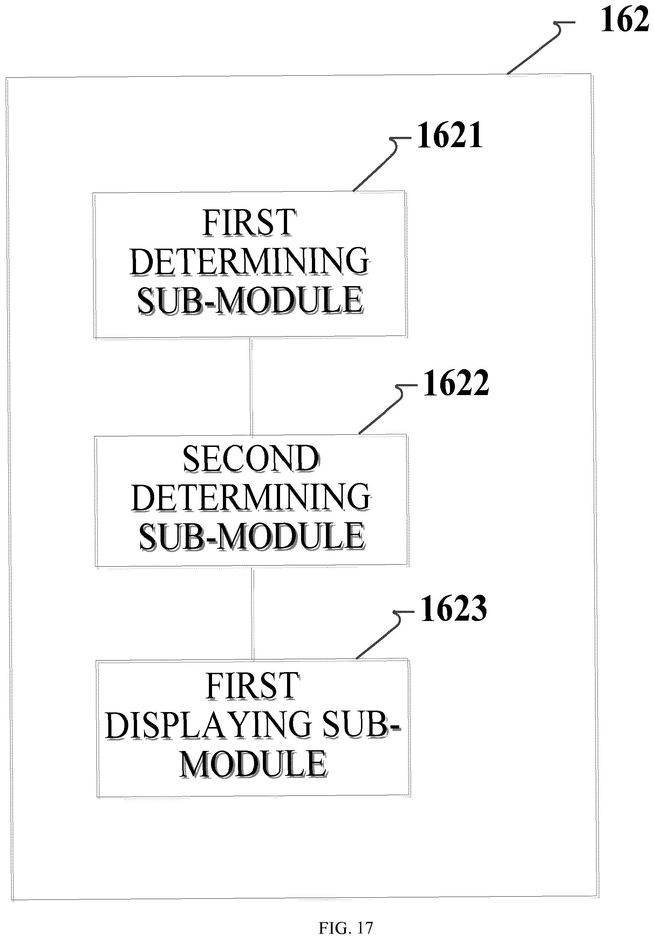

In an embodiment, as shown in Fig. 17, when the message identification includes the application identification of the instant messenger corresponding to the instant message and the number of unprocessed instant messages received by the instant messenger corresponding to the instant message, the first displaying module 162 comprises: a first determining sub-module 1621, a second determining sub-module 1622 and a first displaying sub-module 1623.

The first determining sub-module 1621 is configured to determine instant messengers corresponding to the received instant message and all other instant messages which are unprocessed and which do not belong to the application corresponding to the current interface

The second determining sub-module 1622 is configured to determine receiving times of unprocessed instant messages latest received by respective ones of the instant messengers determined by the first determining sub-module 1621.

The first displaying sub-module 1623 is configured to arrange and display, on the predetermined edge region of the current interface, the application identification of each of the instant messengers and the number of unprocessed instant messages received by the instant messenger, according to a chronological order of the receiving times determined by the second determining sub-module 1622.

As can be seen from this embodiment, when the terminal receives a new instant message which does not belong to the application corresponding to the current interface, it will display the message identification corresponding to the instant message at the very beginning position in the predetermined edge region.

In this embodiment, by arranging and displaying, by the first displaying sub-module 1623, application identifications of instant messengers and the numbers of unprocessed instant messages received by the instant messengers on a predetermined edge region, the user can know at a glance information on unprocessed instant messages (especially the number of the unprocessed instant messages) without entering interfaces of instant messengers corresponding to the instant messages, thereby improving user experience.

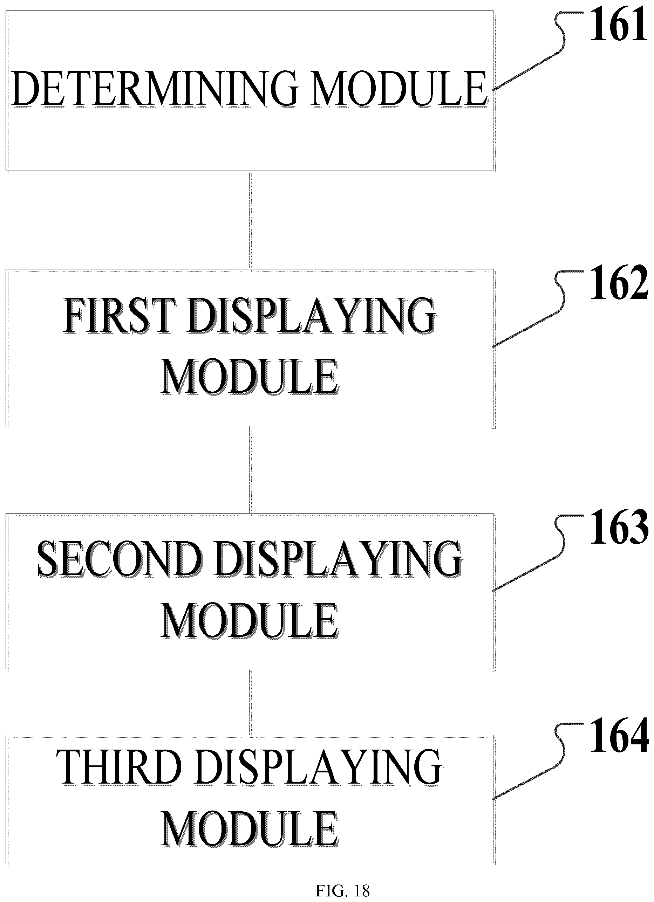

In an embodiment, as shown in Fig. 18, when the message identification displayed by the first displaying module 162 includes the application identification of the instant messenger corresponding to the instant message and the number of unprocessed instant messages received by the instant messenger corresponding to the instant message, the apparatus further comprises: a second displaying module 163 and a third displaying module 164.

The second displaying module 163 is configured to, when a first predetermined operation performed by a user on any message identification is received, display on the current interface an operation box including at least one entry, based on contact information of at least one unprocessed instant message received by an instant messenger corresponding to the message identification, wherein each entry corresponds to at least one instant message sent by one contact.

After the user performs the first predetermined operation on the message identification, displaying of the message identification in the predetermined edge region may be cancelled.

The first predetermined operation includes at least one of the following: a predetermined number of click operations on the message identification; and a sliding operation of sliding the message identification along a predetermined direction. For example, after the user clicks the message identification once or multiple times consecutively or slides the message identification towards the center of the current interface of the terminal, the second displaying module 163 will display an operation box corresponding to the message identification on the current interface of the terminal. The operation box includes one or more entries, and has a size smaller than the current interface of the terminal.

The third displaying module 164 is configured to, when a click operation performed by the user on one of the at least one entry in the operation box displayed by the second displaying module 163 is received, display on the current interface a dialog box of the instant message corresponding to the entry, wherein the dialog box has a smaller size than the current interface.

The dialog box has a size smaller than the current interface. For example, the size of the dialog box is half the size of the current interface. In addition, the dialog box may include contents of the instant message corresponding to the entry.

Furthermore, for an operation box and/or a dialog box for instant messages displayed on the terminal, the user may cancel displaying of the operation box and/or the dialog box by performing a predetermined operation. For example, after the user completes processing of an instant message in the dialog box, he/she can cancel displaying of the dialog box on the current interface simply by sliding the dialog box towards the edge of the terminal. Then, if there is any other unprocessed instant message in the instant messenger corresponding to the instant message, the message identification corresponding to the instant messenger displayed in the predetermined edge region will be updated (for example, the number of instant messages will be updated). If all instant messages in the instant messenger corresponding to the instant message have been processed, the message identification corresponding to the instant message will not be displayed in the predetermined edge region any more.

In the embodiment, by displaying a dialog box of an instant message by the third displaying module 164, the user can process the instant message in the dialog box without entering the interface of an instant messenger. Especially, when a terminal is displaying another application interface, the user can process an instant message in a dialog box and return to the other application interface after processing the instant message, thereby saving a large amount of time and eliminating cumbersome operations for the user to process the instant message and hence improving user experience.

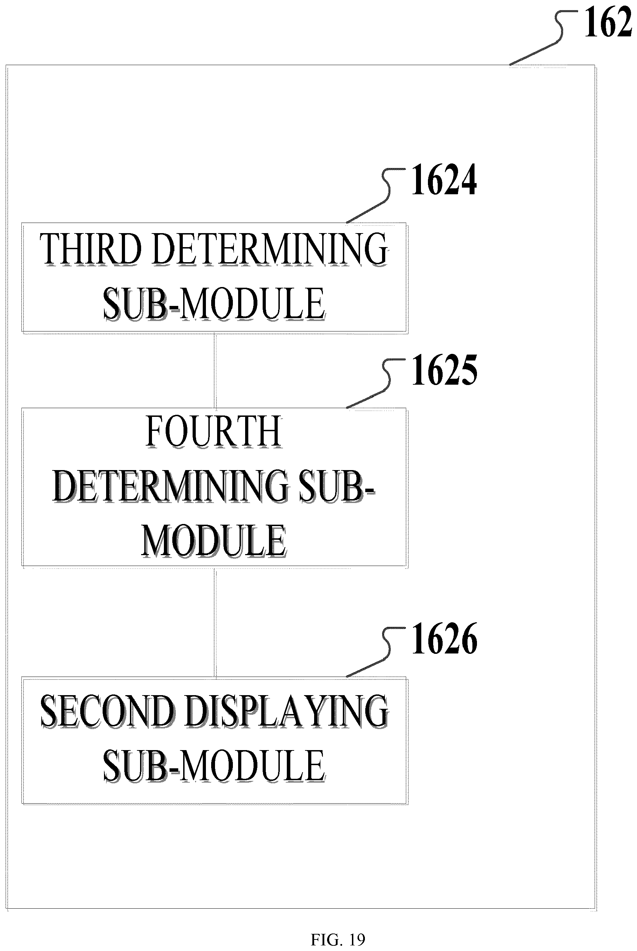

In an embodiment, as shown in Fig. 19, when the message identification includes the identification of the contact sending the instant message and the number of unprocessed instant messages sent by the contact sending the instant message, the first displaying module 162 comprises: a third determining sub-module 1624, a fourth determining sub-module 1625 and a second displaying sub-module 1626.

The third determining sub-module 1624 is configured to determine contacts corresponding to the received instant message and all other instant messages which are unprocessed and which do not belong to the application corresponding to the current interface.

The fourth determining sub-module 1625 is configured to determine receiving times of unprocessed instant messages latest sent by respective ones of the contacts determined by the third determining sub-module 1624.

The second displaying sub-module 1626 is configured to arrange and display, on the predetermined edge region of the current interface, the contact identification of each of the contacts and the number of unprocessed instant messages sent by the contact, according to a chronological order of the receiving times determined by the fourth determining sub-module 1625.

As can be seen from the embodiment, when the terminal receives a new instant message which does not belong to the application corresponding to the current interface, it will display the message identification corresponding to the instant message at the very beginning position in the predetermined edge region.

In the embodiment, by arranging and displaying, by the second displaying sub-module 1626, contact identifications of contacts and the numbers of unprocessed instant messages sent by the contacts on a predetermined edge region, the user can know at a glance information on unprocessed instant messages (especially contact information of the unprocessed instant messages) without entering interfaces of instant messengers corresponding to the instant messages, thereby improving user experience.

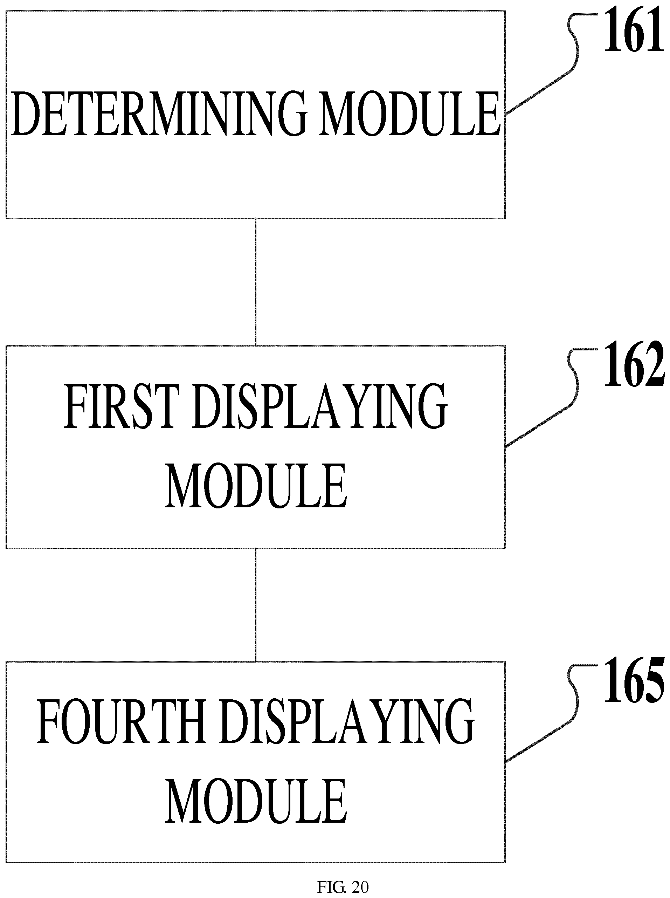

In an embodiment, as shown in Fig. 20, when the message identification displayed by the first displaying module 162 includes the identification of the contact sending the instant message and the number of unprocessed instant messages sent by the contact sending the instant message, the apparatus further comprises a fourth displaying module 165. The fourth displaying module 165 is configured to, when a second predetermined operation performed by a user on any message identification is received, display on the current interface a dialog box of at least one instant message sent by a contact corresponding to the message identification.

The dialog box has a smaller size than the current interface, and the dialog box may include contents of the instant message sent by the contact corresponding to the message identification.

The second predetermined operation may include at least one of the following: a predetermined number of click operations on the message identification; and a sliding operation of sliding the message identification along a predetermined direction. For example, after the user clicks the message identification once or twice consecutively or slides the message identification towards the center of the current interface of the terminal, the fourth displaying module 165 will display a dialog box corresponding to the message identification on the current interface of the terminal.

In an embodiment, after the dialog box including the instant message sent by the contact is displayed on the current interface, displaying of the message identification corresponding to the contact in the predetermined edge region may be cancelled.

In the embodiment, by displaying a dialog box of an instant message by the fourth displaying module 165, the user can process the instant message in the dialog box without entering the interface of an instant messenger. Especially, when a terminal is displaying another application interface, the user can process an instant message in a dialog box and return to the other application interface after processing the instant message, thereby saving a large amount of time and eliminating cumbersome operations for the user to process the instant message and hence improving user experience.

In an embodiment, for a dialog box for an instant messages displayed on the terminal, the user may cancel displaying of the dialog box by performing a predetermined operation, so that the terminal returns to the application previously displayed on the interface. For example, when viewing another page, the user processes an instant message in a popped-up dialog box. After completing the processing, the user slides the dialog box towards the edge of the terminal, so that the terminal will return to the other page previously viewed by the user without requiring the user to perform cumbersome operations.

In any of the above embodiments, the user may cancel displaying of message identifications of instant messages by performing a predetermined operation. For example, it is set in advance not to display message identifications of instant messages; or after the message identifications of the instant messages are displayed, displaying of the message identifications of the instant messages is cancelled by long-pressing a predetermined position in the predetermined edge region.

In any of the above embodiments, the user may also cancel displaying of one or more of message identifications of instant messages. For example, when the user would not like to process one or more instant messages corresponding to a certain message identification, he/she may cancel displaying of the message identification by long-pressing or sliding outwards the message identification.

In an exemplary embodiment, there is provided an instant message processing apparatus, comprising a processor and a memory storing instructions executable by the processor. The processor is configured to: receive an instant message and determine an instant messenger to which the instant message belongs; and when it is determined that the instant messenger is not an application corresponding to a current interface, arrange and display, on a predetermined edge region of the current interface, the instant messenger together with all other instant messages which are unprocessed and which do not belong to the application corresponding to the current interface.

The processor may be further configured to, when the received instant messenger is arranged and displayed, on the predetermined edge region of the current interface, together with all other instant messages which are unprocessed and which do not belong to the application corresponding to the current interface, display a message identification for each of the displayed instant messages. The message identification includes at least one of an application identification of an instant messenger corresponding to the instant message and an identification of a contact sending the instant message.

The processor may be further configured such that: the message identification includes the application identification of the instant messenger corresponding to the instant message and a number of unprocessed instant messages received by the instant messenger corresponding to the instant message; or the message identification includes the identification of the contact sending the instant message and a number of unprocessed instant messages sent by the contact sending the instant message.

The processor may be further configured such that, when the message identification includes the application identification of the instant messenger corresponding to the instant message and the number of unprocessed instant messages received by the instant messenger corresponding to the instant message, arranging and displaying, on the predetermined edge region of the current interface, the received instant messenger together with all other instant messages which are unprocessed and which do not belong to the application corresponding to the current interface comprises: determining instant messengers corresponding to the received instant message and all other instant messages which are unprocessed and which do not belong to the application corresponding to the current interface; determining receiving times of unprocessed instant messages latest received by respective ones of the instant messengers; and arranging and displaying, on the predetermined edge region of the current interface, the application identification of each of the instant messengers and the number of unprocessed instant messages received by the instant messenger, according to a chronological order of the determined receiving times.

The processor may be further configured such that, when the message identification includes the application identification of the instant messenger corresponding to the instant message and the number of unprocessed instant messages received by the instant messenger corresponding to the instant message, the method further comprises: when a first predetermined operation performed by a user on any message identification is received, displaying on the current interface an operation box including at least one entry, based on contact information of at least one unprocessed instant message received by an instant messenger corresponding to the message identification, wherein each entry corresponds to at least one instant message sent by one contact; and when a click operation performed by the user on one of the at least one entry in the operation box is received, displaying on the current interface a dialog box of the instant message corresponding to the entry, wherein the dialog box has a smaller size than the current interface.

The processor may be further configured such that, when the message identification includes the identification of the contact sending the instant message and the number of unprocessed instant messages sent by the contact sending the instant message, arranging and displaying, on the predetermined edge region of the current interface, the received instant messenger together with all other instant messages which are unprocessed and which do not belong to the application corresponding to the current interface comprises: determining contacts corresponding to the received instant message and all other instant messages which are unprocessed and which do not belong to the application corresponding to the current interface; determining receiving times of unprocessed instant messages latest sent by respective ones of the contacts; and arranging and displaying, on the predetermined edge region of the current interface, the contact identification of each of the contacts and the number of unprocessed instant messages sent by the contact, according to a chronological order of the determined receiving times.

The processor may be further configured such that, when the message identification includes the identification of the contact sending the instant message and the number of unprocessed instant messages sent by the contact sending the instant message, the method further comprises: when a second predetermined operation performed by a user on any message identification is received, displaying on the current interface a dialog box of at least one instant message sent by a contact corresponding to the message identification, wherein the dialog box has a smaller size than the current interface.

The processor may be further configured such that the first predetermined operation or the second predetermined operation includes at least one of the following: a predetermined number of click operations on the message identification; and a sliding operation of sliding the message identification along a predetermined direction.

Regarding the apparatus in the above embodiments, the specific manners for the individual modules to perform operations have been described in detail in the embodiments of the related methods and will not be elaborated herein.

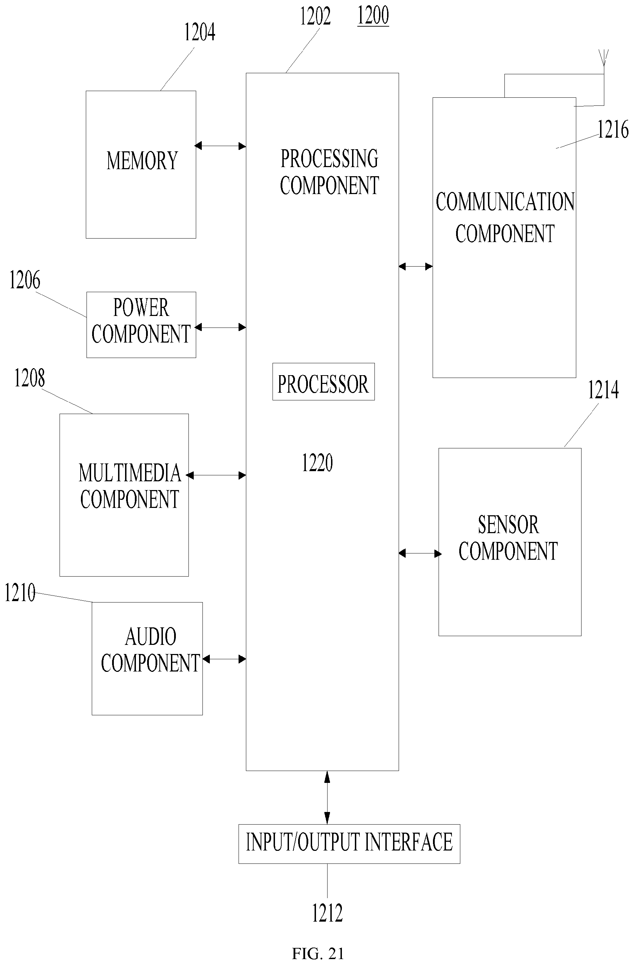

Fig. 21 is a block diagram of an instant message processing apparatus 1200 according to an exemplary embodiment. For example, the apparatus 1200 may be a mobile phone, a computer, a digital broadcast terminal, a messaging device, a gaming console, a tablet device, a medical device, exercise equipment, a personal digital assistant or the like.

The apparatus 1200 may comprise one or more of the following components: a processing component 1202, a memory 1204, a power component 1206, a multimedia component 1208, an audio component 1210, an input/output (I/O) interface 1212, a sensor component 1214 and a communication component 1216.

The processing component 1202 typically controls overall operations of the apparatus 1200, such as the operations associated with display, telephone calls, data communications, camera operations and recording operations. The processing component 1202 may include one or more processors 1220 to execute instructions to perform all or some of the steps in the above described methods. Moreover, the processing component 1202 may include one or more modules which facilitate the interaction between the processing component 1202 and other components. For example, the processing component 1202 may comprise a multimedia module to facilitate the interaction between the multimedia component 1208 and the processing component 1202.

The memory 1204 is configured to store various types of data to support the operation of the apparatus 1200. Examples of such data comprise instructions for any applications or methods operated on the apparatus 1200, contact data, phonebook data, messages, pictures, video, etc. The memory 1204 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the apparatus 1200. The power component 1206 may comprise a power management system, one or more power sources, and any other components associated with the generation, management, and distribution of power in the apparatus 1200.

The multimedia component 1208 comprises a screen providing an output interface between the apparatus 1200 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the apparatus 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone (MIC) configured to receive an external audio signal when the apparatus 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 comprises one or more sensors to provide status assessments of various aspects of the apparatus 1200. For instance, the sensor component 1214 may detect an open/closed status of the apparatus 1200, relative positioning of components, e.g., the display and the keypad, of the apparatus 1200, a change in position of the apparatus 1200 or a component of the apparatus 1200, presence or absence of user's contact with the apparatus 1200, an orientation or an acceleration/deceleration of the apparatus 1200, and a change in temperature of the apparatus 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor or a temperature sensor.

The communication component 1216 is configured to facilitate communication, wired or wirelessly, between the apparatus 1200 and other devices. The apparatus 1200 can access a wireless network based on a communication standard, such as WiFi, 2G, or 3G, or a combination thereof. In one embodiment, the communication component 1216 receives a broadcast signal or broadcast associated information from an external broadcast management system via a broadcast channel. In one embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an embodiment, there is also provided a non-transitory computer-readable storage medium comprising instructions, such as comprised in the memory 1204, executable by the processor 1220 in the apparatus 1200, for performing the above-described methods. For example, the non-transitory computer-readable storage medium may be a ROM, a RAM, a CD-ROM, a magnetic tape, a floppy disc, an optical data storage device or the like.

The non-transitory computer-readable storage medium has stored therein instructions that, when executed by the processor of the apparatus 1200, cause the apparatus 1200 to perform the above-described instant message processing method.

The method comprises: receiving an instant message and determining an instant messenger to which the instant message belongs; and when it is determined that the instant messenger is not an application corresponding to a current interface, arranging and displaying, on a predetermined edge region of the current interface, the instant messenger together with all other instant messages which are unprocessed and which do not belong to the application corresponding to the current interface.

When the received instant messenger is arranged and displayed, on the predetermined edge region of the current interface, together with all other instant messages which are unprocessed and which do not belong to the application corresponding to the current interface, a message identification is displayed for each of the displayed instant messages. The message identification includes at least one of an application identification of an instant messenger corresponding to the instant message and an identification of a contact sending the instant message.

The message identification includes the application identification of the instant messenger corresponding to the instant message and a number of unprocessed instant messages received by the instant messenger corresponding to the instant message; or the message identification includes the identification of the contact sending the instant message and a number of unprocessed instant messages sent by the contact sending the instant message.

When the message identification includes the application identification of the instant messenger corresponding to the instant message and the number of unprocessed instant messages received by the instant messenger corresponding to the instant message, arranging and displaying, on the predetermined edge region of the current interface, the received instant messenger together with all other instant messages which are unprocessed and which do not belong to the application corresponding to the current interface comprises: determining instant messengers corresponding to the received instant message and all other instant messages which are unprocessed and which do not belong to the application corresponding to the current interface; determining receiving times of unprocessed instant messages latest received by respective ones of the instant messengers; and arranging and displaying, on the predetermined edge region of the current interface, the application identification of each of the instant messengers and the number of unprocessed instant messages received by the instant messenger, according to a chronological order of the determined receiving times.

When the message identification includes the application identification of the instant messenger corresponding to the instant message and the number of unprocessed instant messages received by the instant messenger corresponding to the instant message, the method further comprises: when a first predetermined operation performed by a user on any message identification is received, displaying on the current interface an operation box including at least one entry, based on contact information of at least one unprocessed instant message received by an instant messenger corresponding to the message identification, wherein each entry corresponds to at least one instant message sent by one contact; and when a click operation performed by the user on one of the at least one entry in the operation box is received, displaying on the current interface a dialog box of the instant message corresponding to the entry, wherein the dialog box has a smaller size than the current interface.

When the message identification includes the identification of the contact sending the instant message and the number of unprocessed instant messages sent by the contact sending the instant message, arranging and displaying, on the predetermined edge region of the current interface, the received instant messenger together with all other instant messages which are unprocessed and which do not belong to the application corresponding to the current interface comprises: determining contacts corresponding to the received instant message and all other instant messages which are unprocessed and which do not belong to the application corresponding to the current interface; determining receiving times of unprocessed instant messages latest sent by respective ones of the contacts; and arranging and displaying, on the predetermined edge region of the current interface, the contact identification of each of the contacts and the number of unprocessed instant messages sent by the contact, according to a chronological order of the determined receiving times.

When the message identification includes the identification of the contact sending the instant message and the number of unprocessed instant messages sent by the contact sending the instant message, the method further comprises: when a second predetermined operation performed by a user on any message identification is received, displaying on the current interface a dialog box of at least one instant message sent by a contact corresponding to the message identification, wherein the dialog box has a smaller size than the current interface.

The first predetermined operation or the second predetermined operation includes at least one of the following: a predetermined number of click operations on the message identification; and a sliding operation of sliding the message identification along a predetermined direction.

## Claims

1. An instant message processing method, comprising:
receiving (S11) an instant message and determining an instant messenger to which the instant message belongs;
when it is determined that the instant messenger is not an application corresponding to a current interface, arranging and displaying (S12), on a predetermined edge region of the current interface, the instant messenger together with all other instant messages which are unprocessed and which do not belong to the application corresponding to the current interface, wherein
when the received instant messenger is arranged and displayed, on the predetermined edge region of the current interface, together with all other instant messages which are unprocessed and which do not belong to the application corresponding to the current interface, a message identification is displayed for each of the displayed instant messages,
wherein the message identification includes an application identification of an instant messenger corresponding to the instant message and a number of unprocessed instant messages received by the instant messenger corresponding to the instant message,
**characterized in that** the method further comprises:
when a first predetermined operation performed by a user on any message identification is received, displaying (S71) on the current interface an operation box including at least one entry for every different contact information, based on contact information of at least one unprocessed instant message received by an instant messenger corresponding to the message identification, wherein each entry corresponds to at least one instant message sent by one contact;
when a click operation performed by the user on one of the at least one entry in the operation box is received, displaying (S72) on the current interface a dialog box of the instant message corresponding to the entry, wherein the dialog box has a smaller size than the current interface.

2. The method of claim 1, wherein
the message identification includes an identification of a contact sending the instant message.

3. The method of claim 1, wherein
arranging and displaying, on the predetermined edge region of the current interface, the received instant messenger together with all other instant messages which are unprocessed and which do not belong to the application corresponding to the current interface comprises:
determining (S21) instant messengers corresponding to the received instant message and all other instant messages which are unprocessed and which do not belong to the application corresponding to the current interface;
determining (S22) receiving times of unprocessed instant messages latest received by respective ones of the instant messengers; and
arranging and displaying (S23), on the predetermined edge region of the current interface, the application identification of each of the instant messengers and the number of unprocessed instant messages received by the instant messenger, according to a chronological order of the determined receiving times.

4. The method of claim 2, wherein
when the message identification includes the identification of the contact sending the instant message and the number of unprocessed instant messages sent by the contact sending the instant message, arranging and displaying, on the predetermined edge region of the current interface, the received instant messenger together with all other instant messages which are unprocessed and which do not belong to the application corresponding to the current interface comprises:
determining (S101) contacts corresponding to the received instant message and all other instant messages which are unprocessed and which do not belong to the application corresponding to the current interface;
determining (S102) receiving times of unprocessed instant messages latest sent by respective ones of the contacts; and
arranging and displaying (S103), on the predetermined edge region of the current interface, the contact identification of each of the contacts and the number of unprocessed instant messages sent by the contact, according to a chronological order of the determined receiving times.

5. The method of claim 2 or 4, wherein
when the message identification includes the identification of the contact sending the instant message and the number of unprocessed instant messages sent by the contact sending the instant message, the method further comprises:
when a second predetermined operation performed by a user on any message identification is received, displaying on the current interface a dialog box of at least one instant message sent by a contact corresponding to the message identification, wherein the dialog box has a smaller size than the current interface.

6. The method of claim 1 or 5, wherein the first predetermined operation or the second predetermined operation includes at least one of the following:
a predetermined number of click operations on the message identification;
a sliding operation of sliding the message identification along a predetermined direction.

7. An instant message processing apparatus, comprising:
a determining module (161) configured to receive an instant message and determine an instant messenger to which the instant message belongs;
a first displaying module (162) configured to, when the determining module determines that the instant messenger is not an application corresponding to a current interface, arrange and display, on a predetermined edge region of the current interface, the instant messenger together with all other instant messages which are unprocessed and which do not belong to the application corresponding to the current interface,
wherein the first displaying module (162) is configured to, when the received instant messenger is arranged and displayed, on the predetermined edge region of the current interface, together with all other instant messages which are unprocessed and which do not belong to the application corresponding to the current interface, display a message identification for each of the displayed instant messages, wherein the message identification includes an application identification of an instant messenger corresponding to the instant message and a number of unprocessed instant messages received by the instant messenger corresponding to the instant message,
wherein the message identification displayed by the first displaying module (162) includes the application identification of the instant messenger corresponding to the instant message and a number of unprocessed instant messages received by the instant messenger corresponding to the instant message,
**characterized by** a second displaying module configured to, when a first predetermined operation performed by a user on any message identification is received, display on the current interface an operation box including at least one entry, for every different contact information based on contact information of at least one unprocessed instant message received by an instant messenger corresponding to the message identification, wherein each entry corresponds to at least one instant message sent by one contact; and
a third displaying module configured to, when a click operation performed by the user on one of the at least one entry in the operation box, displayed by the second displaying module is received, display on the current interface a dialog box of the instant message corresponding to the entry, wherein the dialog box has a smaller size than the current interface.

8. The apparatus of claim 7, wherein the message identification includes an identification of a contact sending the instant message.

9. The apparatus of claim 7 or 8, wherein
when the message identification includes the application identification of the instant messenger corresponding to the instant message and the number of unprocessed instant messages received by the instant messenger corresponding to the instant message, the first displaying module (162) comprises:
a first determining sub-module (1621) configured to determine instant messengers corresponding to the received instant message and all other instant messages which are unprocessed and which do not belong to the application corresponding to the current interface;
a second determining sub-module (1622) configured to determine receiving times of unprocessed instant messages latest received by respective ones of the instant messengers determined by the first determining sub-module; and
a first displaying sub-module (1623) configured to arrange and display, on the predetermined edge region of the current interface, the application identification of each of the instant messengers and the number of unprocessed instant messages received by the instant messenger, according to a chronological order of the receiving times determined by the second determining sub-module.

10. An instant message processing apparatus, comprising:
a processor (1220), and
a memory (1206) storing instructions executable by the processor (1220),
wherein the processor (1220) is configured to perform an instant message processing method according to any of claims 1 to 6.

11. A computer program including instructions for executing the steps of an instant message processing method according to any of claims 1 to 6 when said program is executed by a computer.

12. A recording medium readable by a computer and having recorded thereon a computer program including instructions for executing the steps of an instant message processing method according to any of claims 1 to 6.

## Patentansprüche

1. Verfahren zur Verarbeitung von Sofortnachrichten, umfassend:
Empfangen (S11) einer Sofortnachricht und Bestimmen eines Instant-Messengers bzw. Sofortnachrichten-Dienst, zu dem die Sofortnachricht gehört;
wenn festgestellt wird, dass der Instant-Messenger keine Anwendung ist, die einer aktuellen Benutzeroberfläche entspricht, Anordnen und Anzeigen (S12) des Instant-Messengers zusammen mit allen anderen Sofortnachrichten, die unverarbeitet sind und die nicht zu der Anwendung gehören, die der aktuellen Benutzeroberfläche entspricht, auf einem vorbestimmten Randbereich der aktuellen Benutzeroberfläche, wobei
wenn der empfangene Instant-Messenger zusammen mit allen anderen Sofortnachrichten, die unverarbeitet sind und die nicht zu der der aktuellen Benutzeroberfläche entsprechenden Anwendung gehören, im vorgegebenen Randbereich der aktuellen Benutzeroberfläche angeordnet und angezeigt wird, für jede der angezeigten Sofortnachrichten eine Nachrichtenkennung angezeigt wird,
wobei die Nachrichtenkennung eine Anwendungskennung eines Instant-Messengers entsprechend der Sofortnachricht und eine Anzahl unverarbeiteter Sofortnachrichten, die von dem Instant-Messenger empfangen wurden, entsprechend der Sofortnachricht enthält,
**dadurch gekennzeichnet, dass** das Verfahren ferner umfasst:
wenn eine erste vorbestimmte Operation, die von einem Benutzer an irgendeiner Nachrichtenkennung durchgeführt wird, empfangen wird, Anzeigen (S71) auf der aktuellen Benutzeroberfläche eines Operationsfeldes, das mindestens einen Eintrag für jede unterschiedliche Kontaktinformation enthält, basierend auf der Kontaktinformation von mindestens einer unverarbeiteten Sofortnachricht, die von einem Instant-Messenger empfangen wird, die der Nachrichtenkennung entspricht, wobei jeder Eintrag mindestens einer von einem Kontakt gesendeten Sofortnachricht entspricht;
wenn eine Klickoperation, die der Benutzer auf einen der mindestens einen Einträge in dem Operationsfeld ausführt, empfangen wird, Anzeigen (S72) eines Dialogfeldes der Sofortnachricht, die dem Eintrag entspricht, auf der aktuellen Benutzeroberfläche, wobei das Dialogfeld eine kleinere Größe als die aktuelle Benutzeroberfläche hat.

2. Verfahren nach Anspruch 1, wobei
die Nachrichtenkennung eine Kennung eines Kontakts, der die Sofortnachricht sendet, aufweist.

3. Verfahren nach Anspruch 1, wobei
Anordnung und Anzeige des empfangenen Instant-Messengers zusammen mit allen anderen unverarbeiteten Sofortnachrichten, die nicht zu der der aktuellen Benutzeroberfläche entsprechenden Anwendung gehören, auf dem vorbestimmten Randbereich der aktuellen Benutzeroberfläche folgendes umfasst:
Bestimmung (S21) der Instant-Messenger, die der empfangenen Sofortnachricht entsprechen, und aller anderen Sofortnachrichten, die unverarbeitet sind und nicht zu der Anwendung gehören, die der aktuellen Benutzeroberfläche entspricht;
Bestimmung (S22) der Empfangszeiten von unverarbeiteten Sofortnachrichten, die zuletzt von den jeweiligen Instant-Messengern empfangen wurden; und
Anordnen und Anzeigen (S23) der Anwendungskennung jedes der Instant-Messenger und der Anzahl der von dem Instant-Messenger empfangenen unverarbeiteten Sofortnachrichtung auf dem vorbestimmten Randbereich der aktuellen Benutzeroberfläche gemäß einer chronologischen Reihenfolge der festgelegten Empfangszeiten.

4. Verfahren nach Anspruch 2, wobei
wenn die Nachrichtenkennung die Identifizierung des die Sofortnachricht sendenden Kontakts und die Anzahl der unverarbeiteten Sofortnachrichten enthält, die von dem die Sofortnachricht sendenden Kontakt gesendet wurden, das Anordnen und Anzeigen des empfangenen Instant-Messengers zusammen mit allen anderen Sofortnachrichten, die unverarbeitet sind und nicht zu der der aktuellen Benutzeroberfläche entsprechenden Anwendung gehören, im vorgegebenen Randbereich der aktuellen Benutzeroberfläche, folgendes umfasst:
Bestimmung (S101) der Kontakte, die der empfangenen Sofortnachricht und allen anderen Sofortnachrichten entsprechen, die unverarbeitet sind und nicht zu der Anwendung gehören, die der aktuellen Benutzeroberfläche entspricht;
Bestimmung (S102) der Empfangszeiten von unverarbeiteten Sofortnachrichten, die zuletzt von den jeweiligen Kontakten gesendet wurden; und
Anordnung und Anzeige (S103) der Kontaktkennung jedes der Kontakte und der Anzahl der vom Kontakt gesendeten unverarbeiteten Sofortnachrichten auf dem vorbestimmten Randbereich der Strombenutzeroberfläche gemäß einer chronologischen Reihenfolge der festgelegten Empfangszeiten.

5. Verfahren nach Anspruch 2 oder 4, wobei
wenn die Nachrichtenkennung die Kennung des Kontakts, der die Sofortnachricht sendet, und die Anzahl unverarbeiteter Sofortnachrichten, die von dem Kontakt, der die Sofortnachricht sendet, gesendet wurden, enthält, das Verfahren ferner folgendes umfasst:
wenn eine zweite vorbestimmte Operation, die von einem Benutzer an einer beliebigen Nachrichtenkennung durchgeführt wird, empfangen wird, Anzeigen eines Dialogfeldes mit mindestens einer Sofortnachricht, die von einem Kontakt entsprechend der Nachrichtenkennung gesendet wird, auf der aktuellen Benutzeroberfläche, wobei das Dialogfeld eine kleinere Größe als die aktuelle Benutzeroberfläche hat.

6. Verfahren nach Anspruch 1 oder 5, wobei der erste vorbestimmte Vorgang oder der zweite vorbestimmte Vorgang mindestens einen der folgenden Vorgänge umfasst:
eine vorgegebene Anzahl von Klickoperationen auf die Nachrichtenkennung;
eine Gleitoperation, bei der die Nachrichtenkennung entlang einer vorgegebenen Richtung verschoben wird.

7. Sofortnachrichten-Verarbeitungsvorrichtung, umfassend:
ein Bestimmungsmodul (161), das so konfiguriert ist, dass es eine Sofortnachricht empfängt und einen Instant-Messenger bestimmt, zu dem die Sofortnachricht gehört;
ein erstes Anzeigemodul (162), das so konfiguriert ist, dass es, wenn das Bestimmungsmodul feststellt, dass der Instant-Messenger keine Anwendung ist, die einer aktuellen Benutzeroberfläche entspricht, den Instant-Messenger zusammen mit allen anderen Sofortnachrichtung, die unverarbeitet sind und die nicht zu der Anwendung gehören, die der aktuellen Benutzeroberfläche entspricht, an einem vorbestimmten Randbereich der aktuellen Benutzeroberfläche anordnet und anzeigt,
wobei das erste Anzeigemodul (162) so konfiguriert ist, dass es, wenn der empfangene Instant-Messenger angeordnet und angezeigt wird, auf dem vorbestimmten Randbereich der aktuellen Benutzeroberfläche zusammen mit allen anderen Sofortnachrichten, die unverarbeitet sind und die nicht zu der der aktuellen Benutzeroberfläche entsprechenden Anwendung gehören, eine Nachrichtenkennung für jede der angezeigten Sofortnachrichten anzeigt, wobei die Nachrichtenkennung eine Anwendungskennung eines Instant-Messengers entsprechend der Sofortnachricht und eine Anzahl von unverarbeiteten Sofortnachrichtung, die von dem Instant-Messenger entsprechend der Sofortnachricht empfangen wurden, umfasst,
wobei die durch das erste Anzeigemodul (162) angezeigte Nachrichtenkennung die Anwendungskennung des Instant-Messengers entsprechend der Sofortnachricht und eine Anzahl von durch den Instant-Messenger empfangenen unverarbeiteten Sofortnachrichten entsprechend der Sofortnachricht enthält,
**gekennzeichnet durch** ein zweites Anzeigemodul, das so konfiguriert ist, dass es, wenn eine erste vorbestimmte Operation, die von einem Benutzer an einer beliebigen Nachrichtenkennung durchgeführt wird, empfangen wird, an der aktuellen Benutzeroberfläche ein Operationsfeld anzeigt, das mindestens einen Eintrag für jede unterschiedliche Kontaktinformation auf der Grundlage von Kontaktinformation mindestens einer unverarbeiteten Sofortnachricht enthält, die von einem Instant-Messenger empfangen wird und der Nachrichtenkennung entspricht, wobei jeder Eintrag mindestens einer von einem Kontakt gesendeten Sofortnachricht entspricht; und
ein drittes Anzeigemodul, das so konfiguriert ist, dass es bei Empfang einer Klickoperation, die der Benutzer auf einen der mindestens einen Einträge in dem vom zweiten Anzeigemodul angezeigten Operationsfeld ausführt, auf der aktuellen Benutzeroberfläche ein Dialogfeld mit der dem Eintrag entsprechenden Sofortnachricht anzeigt, wobei das Dialogfeld eine kleinere Größe als die aktuelle Benutzeroberfläche hat.

8. Vorrichtung nach Anspruch 7, wobei die Nachrichtenkennung eine Kennung eines Kontakts einschließt, der die Sofortnachricht sendet.

9. Vorrichtung nach Anspruch 7 oder 8, wobei
wenn die Nachrichtenkennung die Anwendungskennung des der Sofortnachricht entsprechenden Instant-Messengers und die Anzahl der vom Instant-Messenger empfangenen, der Sofortnachricht entsprechenden, nicht verarbeiteten Sofortnachrichten enthält, umfasst das erste Anzeigemodul (162):
ein erstes Bestimmungs-Untermodul (1621), das so konfiguriert ist, dass es Instant-Messenger bestimmt, die der empfangenen Sofortnachricht und allen anderen Sofortnachrichten entsprechen, die unverarbeitet sind und nicht zu der Anwendung gehören, die der aktuellen Benutzeroberfläche entspricht;
ein zweites Bestimmungs-Untermodul (1622), das so konfiguriert ist, dass es die Empfangszeiten unverarbeiteter Sofortnachrichten bestimmt, die zuletzt von jeweiligen der durch das erste Bestimmungs-Untermodul bestimmten Sofortnachrichtenübermittler empfangen wurden; und
ein erstes Anzeige-Untermodul (1623), das so konfiguriert ist, dass es auf dem vorbestimmten Randbereich der aktuellen Benutzeroberfläche die Anwendungskennung jedes der Instant-Messenger und die Anzahl der von dem Instant-Messenger empfangenen unverarbeiteten Sofortnachrichtung gemäß einer chronologischen Reihenfolge der durch das zweite Bestimmungs-Untermodul bestimmten Empfangszeiten anordnet und anzeigt.

10. Sofortnachrichten-Verarbeitungsvorrichtung, umfassend:
einen Prozessor (1220), und
einen Speicher (1206), der vom Prozessor (1220) ausführbare Befehle speichert,
wobei der Prozessor (1220) so konfiguriert ist, dass er ein Sofortnachrichten-Verarbeitungsverfahren gemäß einem der Ansprüche 1 bis 6 durchführt.

11. Computerprogramm mit Befehlen zur Ausführung der Schritte eines Sofortnachrichten-Verarbeitungsverfahrens nach einem der Ansprüche 1 bis 6, wenn das Programm von einem Computer ausgeführt wird.

12. Ein Aufzeichnungsmedium, das von einem Computer lesbar ist und auf dem ein Computerprogramm aufgezeichnet ist, das Anweisungen zur Ausführung der Schritte eines Sofortnachrichten-Verarbeitungsverfahrens gemäß einem der Ansprüche 1 bis 6 enthält.

## Revendications

1. Procédé de traitement de message instantané, comportant les étapes consistant à :
recevoir (S11) un message instantané et déterminer une messagerie instantanée à laquelle le message instantané appartient ;
lorsqu'il est déterminé que la messagerie instantanée n'est pas une application correspondant à une interface actuelle, agencer et afficher (S12), sur une zone de bord prédéterminée de l'interface actuelle, la messagerie instantanée conjointement avec tous les autres messages instantanés qui ne sont pas traités et qui n'appartiennent pas à l'application correspondant à l'interface actuelle, dans lequel
lorsque la messagerie instantanée reçue est agencée et affichée, sur la zone de bord prédéterminée de l'interface actuelle, conjointement avec tous les autres messages instantanés qui ne sont pas traités et qui n'appartiennent pas à l'application correspondant à l'interface actuelle, une identification de message est affichée pour chacun des messages instantanés affichés,
dans lequel l'identification de message inclut une identification d'application d'une messagerie instantanée correspondant au message instantané et un nombre de messages instantanés non traités reçus par la messagerie instantanée correspondant au message instantané,
**caractérisé en ce que** le procédé comporte en outre les étapes consistant à :
lorsqu'une première opération prédéterminée exécutée par un utilisateur sur une identification de message quelconque est reçue, afficher (S71) sur l'interface actuelle une fenêtre d'opération incluant au moins une entrée pour chaque information de contact différente, sur la base d'informations de contact d'au moins un message instantané non traité reçu par une messagerie instantanée correspondant à l'identification de message, dans lequel chaque entrée correspond à au moins un message instantané envoyé par un contact ;
lorsqu'une opération de clic exécutée par l'utilisateur sur l'une des au moins une entrée dans la fenêtre d'opération est reçue, afficher (S72) sur l'interface actuelle une boîte de dialogue du message instantané correspondant à l'entrée, dans lequel la boîte de dialogue a une taille plus petite que l'interface actuelle.

2. Procédé selon la revendication 1, dans lequel l'identification de message inclut une identification d'un contact envoyant le message instantané.

3. Procédé selon la revendication 1, dans lequel l'agencement et l'affichage, sur la zone de bord prédéterminée de l'interface actuelle, de la messagerie instantanée reçue conjointement avec tous les autres messages instantanés qui ne sont pas traités et qui n'appartiennent pas à l'application correspondant à l'interface actuelle comportent les étapes consistant à :
déterminer (S21) des messageries instantanées correspondant au message instantané reçu et à tous les autres messages instantanés qui ne sont pas traités et qui n'appartiennent pas à l'application correspondant à l'interface actuelle ;
déterminer (S22) des instants de réception de messages instantanés non traités reçus en dernier par des messageries respectives parmi les messageries instantanées ; et
agencer et afficher (S23), sur la zone de bord prédéterminée de l'interface actuelle, l'identification d'application de chacune des messageries instantanées et le nombre de messages instantanés non traités reçus par la messagerie instantanée, selon un ordre chronologique des instants de réception déterminés.

4. Procédé selon la revendication 2, dans lequel lorsque l'identification de message inclut l'identification du contact envoyant le message instantané et le nombre de messages instantanés non traités envoyés par le contact envoyant le message instantané, l'agencement et l'affichage, sur la zone de bord prédéterminée de l'interface actuelle, de la messagerie instantanée reçue conjointement avec tous les autres messages instantanés qui ne sont pas traités et qui n'appartiennent pas à l'application correspondant à l'interface actuelle comportent les étapes consistant à :
déterminer (S101) des contacts correspondant au message instantané reçu et à tous les autres messages instantanés qui ne sont pas traités et qui n'appartiennent pas à l'application correspondant à l'interface actuelle ;
déterminer (S102) des instants de réception de messages instantanés non traités reçus en dernier par des contacts respectifs parmi les contacts ; et
agencer et afficher (S103), sur la zone de bord prédéterminée de l'interface actuelle, l'identification de contact de chacun des contacts et le nombre de messages instantanés non traités envoyés par le contact, selon un ordre chronologique des instants de réception déterminés.

5. Procédé selon la revendication 2 ou 4, dans lequel lorsque l'identification de message inclut l'identification du contact envoyant le message instantané et le nombre de messages instantanés non traités envoyés par le contact envoyant le message instantané, le procédé comporte en outre l'étape consistant à :
lorsqu'une seconde opération prédéterminée exécutée par un utilisateur sur une identification de message quelconque est reçue, afficher sur l'interface actuelle une boîte de dialogue d'au moins un message instantané envoyé par un contact correspondant à l'identification de message, dans lequel la boîte de dialogue a une taille plus petite que l'interface actuelle.

6. Procédé selon la revendication 1 ou 5, dans lequel la première opération prédéterminée ou la seconde opération prédéterminée inclut au moins un élément parmi les suivants :
un nombre prédéterminé d'opérations de clic sur l'identification de message ;
une opération de glissement consistant à faire glisser l'identification de message le long d'une direction prédéterminée.

7. Appareil de traitement de message instantané, comportant :
un module de détermination (161) configuré pour recevoir un message instantané et déterminer une messagerie instantanée à laquelle le message instantané appartient ;
un premier module d'affichage (162) configuré pour, lorsque le module de détermination détermine que la messagerie instantanée n'est pas une application correspondant à une interface actuelle, agencer et afficher, sur une zone de bord prédéterminée de l'interface actuelle, la messagerie instantanée conjointement avec tous les autres messages instantanés qui ne sont pas traités et qui n'appartiennent pas à l'application correspondant à l'interface actuelle,
dans lequel le premier module d'affichage (162) est configuré pour, lorsque la messagerie instantanée reçue est agencée et affichée, sur la zone de bord prédéterminée de l'interface actuelle, conjointement avec tous les autres messages instantanés qui ne sont pas traités et qui n'appartiennent pas à l'application correspondant à l'interface actuelle, afficher une identification de message pour chacun des messages instantanés affichés, dans lequel l'identification de message inclut une identification d'application d'une messagerie instantanée correspondant au message instantané et un nombre de messages instantanés non traités reçus par la messagerie instantanée correspondant au message instantané,
dans lequel l'identification de message affichée par le premier module d'affichage (162) inclut l'identification d'application de la messagerie instantanée correspondant au message instantané et un nombre de messages instantanés non traités reçus par la messagerie instantanée correspondant au message instantané,
**caractérisé par** un deuxième module d'affichage configuré pour, lorsqu'une première opération prédéterminée exécutée par un utilisateur sur une identification de message quelconque est reçue, afficher sur l'interface actuelle une fenêtre d'opération incluant au moins une entrée, pour chaque information de contact différente, sur la base d'informations de contact d'au moins un message instantané non traité reçu par une messagerie instantanée correspondant à l'identification de message, dans lequel chaque entrée correspond à au moins un message instantané envoyé par un contact ; et
un troisième module d'affichage configuré pour, lorsqu'une opération de clic exécutée par l'utilisateur sur l'une des au moins une entrée dans la fenêtre d'opération, affichée par le deuxième module d'affichage est reçue, afficher sur l'interface actuelle une boîte de dialogue du message instantané correspondant à l'entrée, dans lequel la boîte de dialogue a une taille plus petite que l'interface actuelle.

8. Appareil selon la revendication 7, dans lequel l'identification de message inclut une identification d'un contact envoyant le message instantané.

9. Appareil selon la revendication 7 ou 8, dans lequel lorsque l'identification de message inclut l'identification d'application de la messagerie instantanée correspondant au message instantané et le nombre de messages instantanés non traités reçus par la messagerie instantanée correspondant au message instantané, le premier module d'affichage (162) comporte :
un premier sous-module de détermination (1621) configuré pour déterminer des messageries instantanées correspondant au message instantané reçu et à tous les autres messages instantanés qui ne sont pas traités et qui n'appartiennent pas à l'application correspondant à l'interface actuelle ;
un second sous-module de détermination (1622) configuré pour déterminer des instants de réception de messages instantanés non traités reçus en dernier par des messageries respectives parmi les messageries instantanées déterminées par le premier sous-module de détermination ; et
un premier sous-module d'affichage (1623) configuré pour agencer et afficher, sur la zone de bord prédéterminée de l'interface actuelle, l'identification d'application de chacune des messageries instantanées et le nombre de messages instantanés non traités reçus par la messagerie instantanée, selon un ordre chronologique des instants de réception déterminés par le second sous-module de détermination.

10. Appareil de traitement de message instantané, comportant :
un processeur (1220), et
une mémoire (1206) stockant des instructions exécutables par le processeur (1220),
dans lequel le processeur (1220) est configuré pour mettre en œuvre un procédé de traitement de message instantané selon l'une quelconque des revendications 1 à 6.

11. Programme informatique incluant des instructions pour exécuter les étapes d'un procédé de traitement de message instantané selon l'une quelconque des revendications 1 à 6 lorsque ledit programme est exécuté par un ordinateur.

12. Support d'enregistrement lisible par un ordinateur et sur lequel est enregistré un programme informatique incluant des instructions pour exécuter les étapes d'un procédé de traitement de message instantané selon l'une quelconque des revendications 1 à 6.
